# EUROPEAN PATENT APPLICATION

(11) **EP 2 056 219 A1**
(43) Date of publication of application: **06.05.2009**
(21) Application number: 07791172.5
(22) Date of filing: 23.07.2007
(51) Int. Cl.: G06F 17/30

(54) **SEARCH DEVICE AND SEARCH DATABASE GENERATION DEVICE**

(30) Priority: 07.08.2006 JP 2006214918
(71) Applicant: Sharp Kabushiki Kaisha, Osaka-shi, Osaka 545-8522 (JP)
(72) Inventor: HIROSAWA, Masashi, Kizugawa-shi Kyoto 619-0225 (JP)
(74) Representative: Müller - Hoffmann & Partner
(86) International application number: PCT/JP2007/064440
(87) International publication number: WO 2008/018287

(57) **Abstract**

A search device includes a search character string conversion unit (22) for making an inquiry based on an inputted character string for a conversion table stored in a first memory (12) which can be connected to a search device (1) and obtaining search data. Alternatively, the search device includes: a search table acquisition unit (41) for acquiring search data on a search table; a conversion table acquisition unit (42) for obtaining a conversion table in which the search data is correlated to a predetermined data; a search table conversion unit (44) for converting the search data according to the conversion table; and an after-conversion search table generation unit (45) for again generating a search table according to the search data converted by the search table conversion unit (44).

## Description

### Technical Field

The present invention relates to a search device, a search database generation device, a program thereof, a computer-readable recording medium in which the program is stored, a search method, and a method for generating a search database, each of which is related to a process of converting inputted character data and conducing a search based on the inputted character data thus converted.

### Background Art

A search device has been used in order to look up definitions of a word. The search device is operated by entering a word that you want to look up on a computer provided with an electric dictionary in which readings, spellings, and definitions are electrically stored, so that definitions of the word can be searched by referring to the electric dictionary.

The following explanation deals with a process carried out in a general search device. Firstly, a reading or a spelling of a word is inputted as a character string, or the word displayed on a display screen of the search device is specified as a character string. Next, the search device searches for the character string through a database of an electric dictionary provided to the search device. In a case where the character string is correlated with a reading, a spelling, or a definition in the database, the correlated reading, spelling, or definition are outputted as a search result.

However, in a case where the search device includes a database of an electric dictionary which has only a search key for Kana characters (Phonetic Japanese characters), it is impossible to search for a search character string including Kanji (Chinese characters). To deal with the forgoing problem, for example, patent literature 1 discloses the following technique.

In the patent literature 1, a Kanji and Kana character string is converted into a Kana only character string by referring to a Kanji-Kana conversion table, so that the Kana only character can be searched on a search device which has only a search key for Kana characters.

The technique in the patent literature 1, however, the Kanji-Kana conversion table is fixedly provided in a program in a ROM. Therefore, in a case where the Kanji-Kana conversion table is replaced with another kind of conversion table, the program in the ROM has to be changed. Indeed, in the patent literature 1, in a case where the Kanji-Kana conversion table is replaced with a Kana-Kanji conversion table, a Kanji-Kana conversion program is revised to a Kana-Kanji conversion program. Namely, the patent literature 1 has a trouble in that whenever changing conversion tables, a program should be changed. Further, some of the devices are not allowed to change its program.

### Citation List

Patent Literature 1
Japanese Patent Application Publication, Tokukaihei, No. 8-190565 (date of publication: July 23, 1996)

### Summary of Invention

The present invention is made in view of the forgoing problem. An object of the present invention is to provide a search device, a search database generation device, a program thereof, a computer-readable recording medium including the program, a search method, and a method for generating a search database, each of which can more easily realize a search device which has versatility and extensibility.

To attain the object, the search device of the present invention (i) converts inputted data into a search database by referring to a conversion database which contains pre-established data relationships, and (ii) searches for the search data through a search database in which the search data and predetermined information as search results are correlated to each other, conversion database inquiry means for acquiring the search data for the inputted character string by referring to the conversion database, the conversion database being stored in an external recording medium which is connectable to the search device.

According to the invention, the search device can acquire search data to be searched through the search database by referring to the conversion database. Therefore, in a case where the conversion database is changed, it is also possible to acquire search data in the same manner by referring to the conversion database thus changed. Namely, it is not necessary to revise a processing program of the search device in a case of changing the conversion database. Further, since the search device of the present invention refers to the conversion database which is stored in an external memory device, it is possible to change the conversion database by changing the external memory device to be referring to. This makes it easy to change the conversion database. Accordingly, the search device of the present invention has better versatility. As a result, the search device which has versatility and expansibility can be realized with ease.

Note that the above means in the search device can be performed on a computer by a program. Further, any computer can execute the program by storing the program in a computer-readable recording medium.

To attain the object, a search method of the present invention performed by a search device which (i) converts inputted data into search data by referring to a conversion database which contains pre-established data relationships, and (ii) searches for the search data through a search database in which the search data and predetermined information as search results are correlated to each other, the method including the conversion database inquiry step for acquiring the search data for the inputted character string by referring to the conversion database, the conversion database being stored in an external recording medium which is connectable to the search device.

This allows easily realizing the search device which has versatility and extensibility.

To attain the object, a search database generation device of the present invention includes: the conversion database inquiry step for acquiring the search data for the inputted character string by referring to the conversion database, the conversion database being stored in an external recording medium which is connectable to the search device; conversion database acquisition means for acquiring a conversion database in which the search data and predetermined information are correlated to each other; search database data conversion means for converting the search data by referring to the conversion database; and search database generation means for generating a new search database based on the search data thus converted by the search database data conversion means.

According to the above invention, it is possible to create a new search database by converting the search data of the original search database by referring to the conversion database. A change in the conversion database causes creating a search database corresponding to the changed conversion database. Therefore, in a case where the conversion database is changed, it is possible to create a search database corresponding to the changed conversion database. This makes more easily realize the search device having versatility and extensibility.

For example, unlike the present invention, in a case where a conversion database is not used, it is necessary to prepare a search database which is sorted in a desired order in advance. In a case of changing a sorting rule of a search database, the present invention can deal with it by revising the conversion database. In a case where the present invention is not used, however, it is necessary to recreate a search database in a desired order. Further, unlike the present invention, in a case where a new search database sorted in a desired order is created without performing a conversion, it may be necessary to search the entire search database, or may be necessary for a search program to perform a special sorting when search data of the search database are not sorted in an order of the character code or in numerical order. This prevents performing a high-speed search.

Thus, the present invention allows changing a conversion rule with ease, thereby realizing a search device which can perform a high-speed search.

Note that each of the means in the search database generation device can be performed on a computer by a program. Further, the program can be performed on any computer by storing the program in a computer-readable recording medium.

To attain the object, a search database generation method of the present invention includes: the conversion database acquisition step for acquiring a conversion database which contains pre-established data relationships; the search database data acquisition step for acquiring search data in a search database in which the search data and predetermined information as a search result are correlated to each other; the search database data conversion step for converting the search data by referring to the conversion database; and the search database generation step for generating a new search database based on the search data thus converted in the search database data conversion step.

The above invention allows more easily realizing a search device which has versatility and extensibility.

### Brief Description of Drawings

Fig. 1

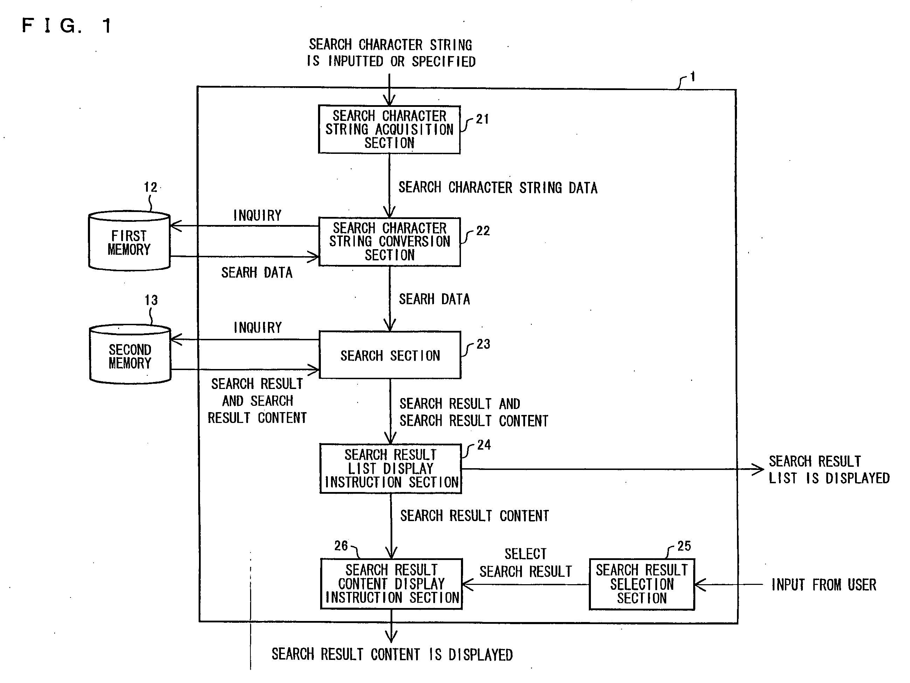

   Fig. 1 is a functional block diagram illustrating an embodiment of a search device in accordance with the present invention.
Fig. 2

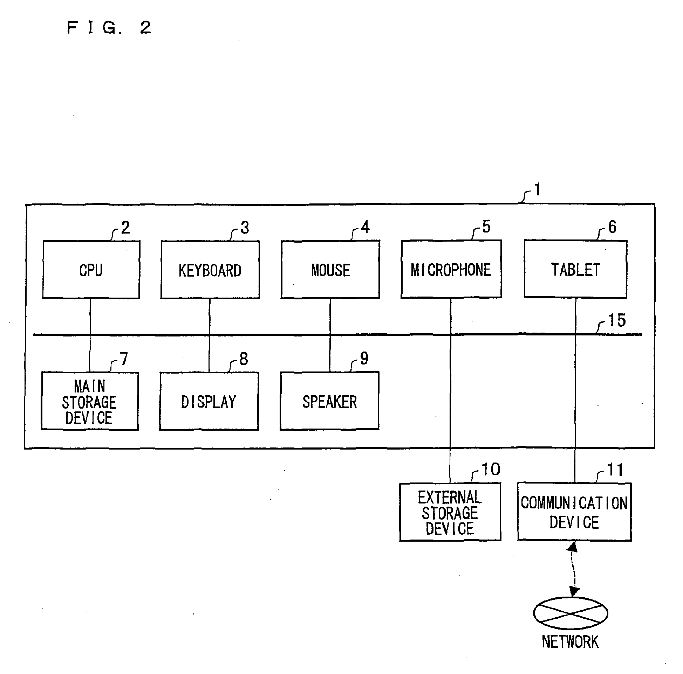

   Fig. 2 is a schematic view illustrating a hardware structure of the search device.
Fig. 3

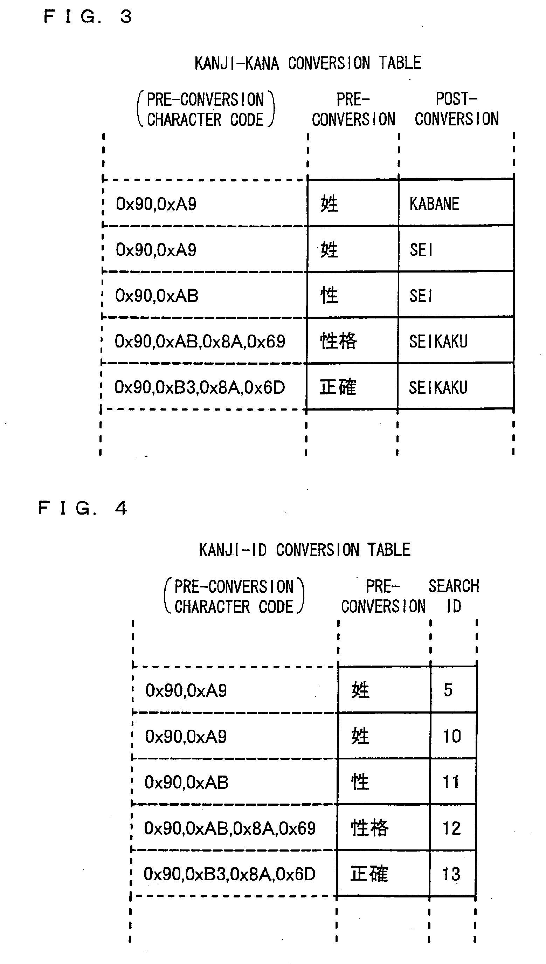

   Fig. 3 is a drawing illustrating a Kanji-Kana conversion table for converting a Kanji character string to a Kana character string in the present invention.
Fig. 4
   Fig. 4 is a drawing illustrating a conversion table for converting a Kanji character string to a search ID in the present invention.
Fig. 5

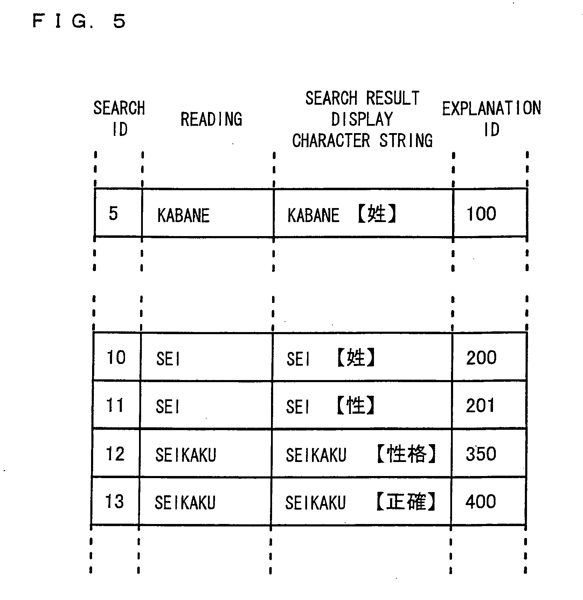

   Fig. 5 is a drawing illustrating a data structure of a search table of the present invention.
Fig. 6

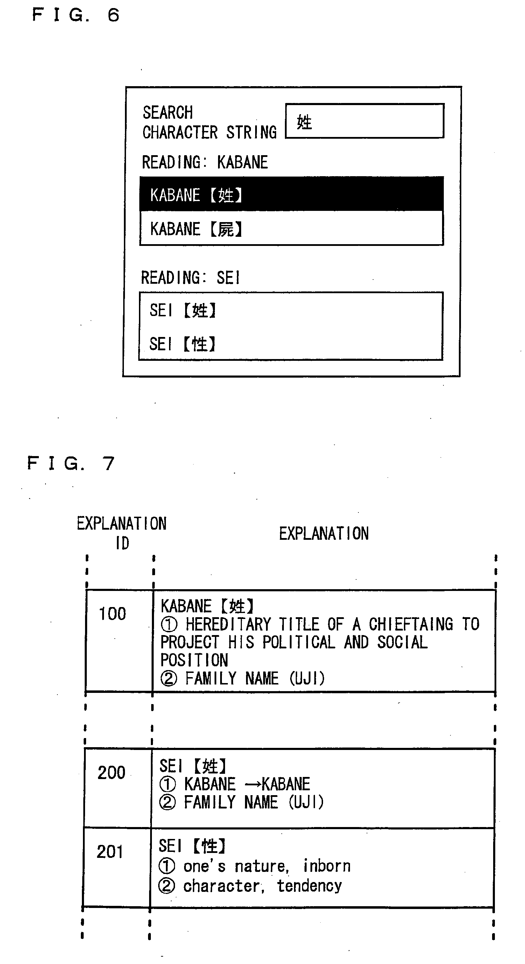

   Fig. 6 is a drawing illustrating an example display screen of a display 8 as a result of a search conducted by the search device based on a search character string " 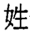 ".
Fig. 7
   Fig. 7 is a drawing illustrating a data example of contents of a search result in the present invention.
Fig. 8

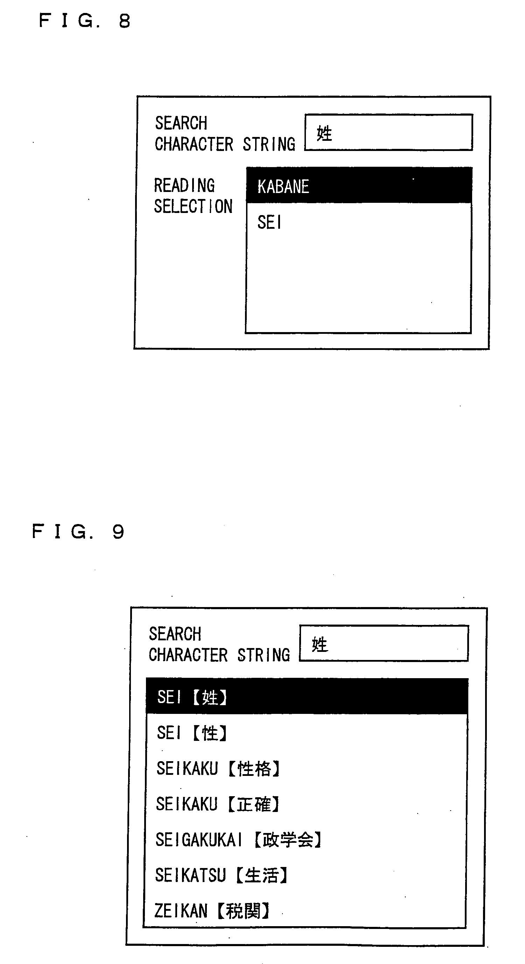

   Fig. 8 is a drawing illustrating an example of a display screen for selecting search data in the present invention.
Fig. 9
   Fig. 9 is a drawing illustrating an example of a search result of the present invention.
Fig. 10

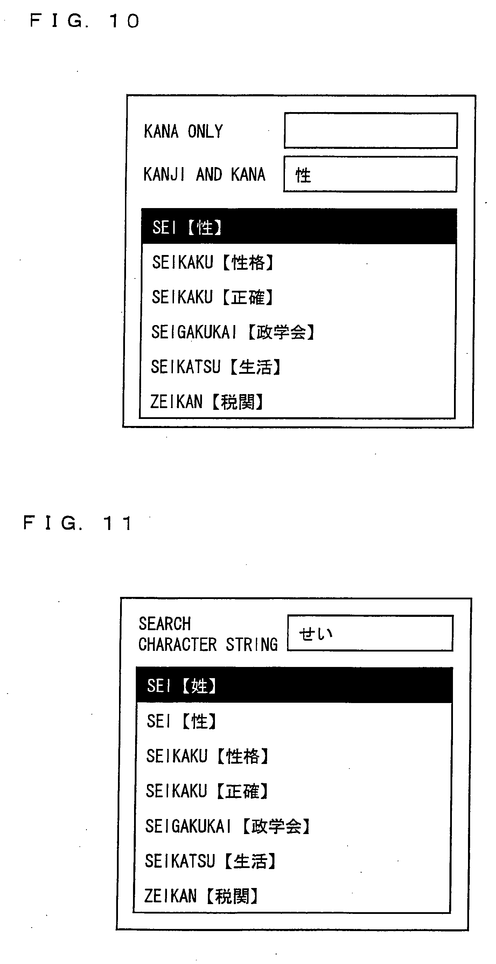

   Fig. 10 is a drawing illustrating an example of a search result of the present invention.
Fig. 11
   Fig. 11 is a drawing illustrating an example of a search result of the present invention.
Fig. 12

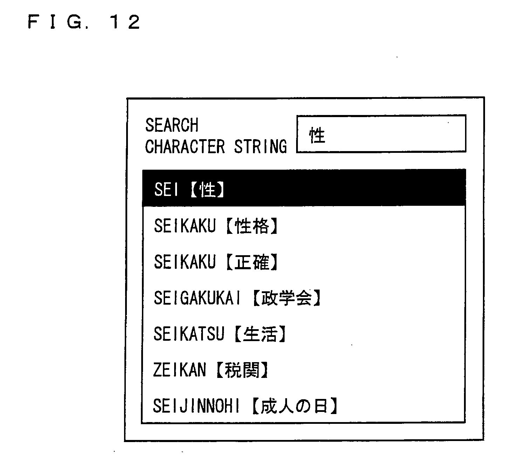

   Fig. 12 is a drawing illustrating an example of a search result of the present invention.
Fig. 13

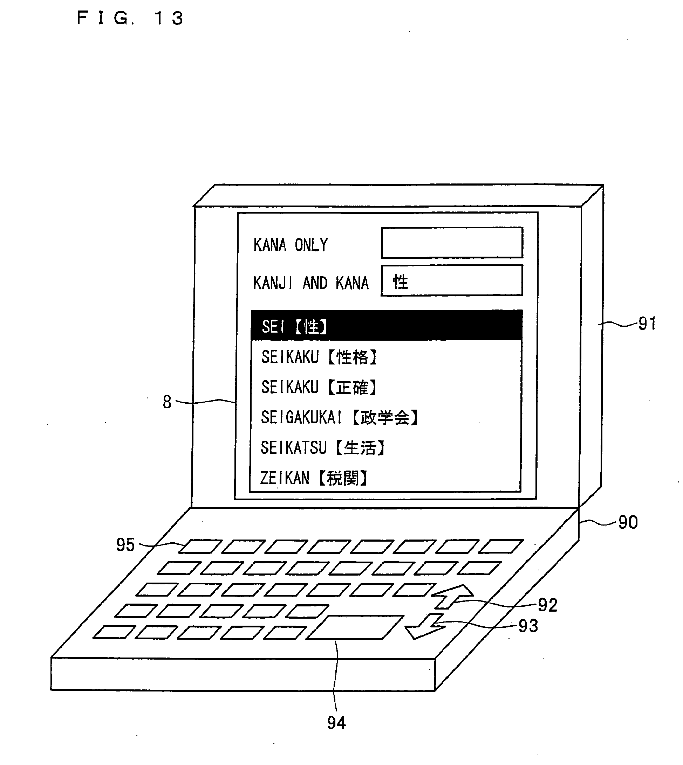

   Fig. 13 is a drawing illustrating an example of an outer appearance of an electronic display apparatus including the search device.
Fig. 14

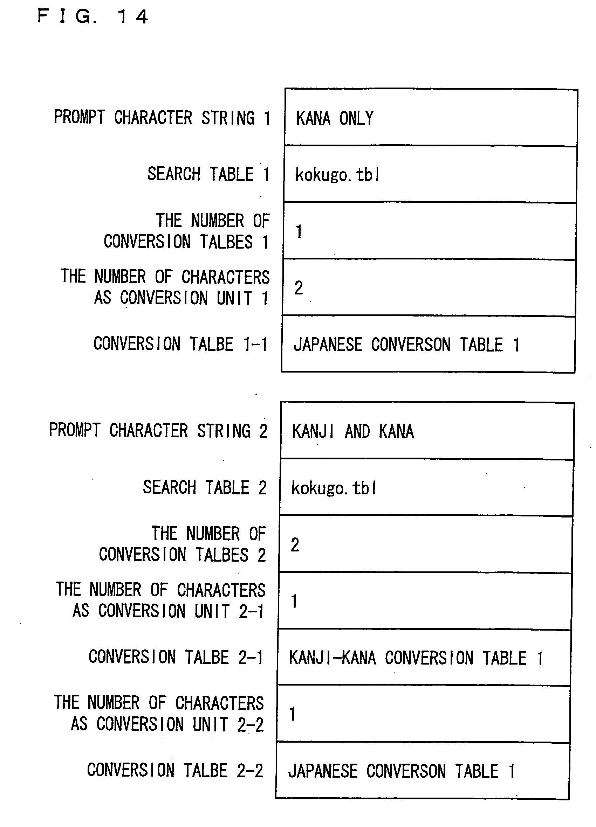

   Fig. 14 is a drawing illustrating an example of a data structure in a conversion process of the present invention.
Fig. 15

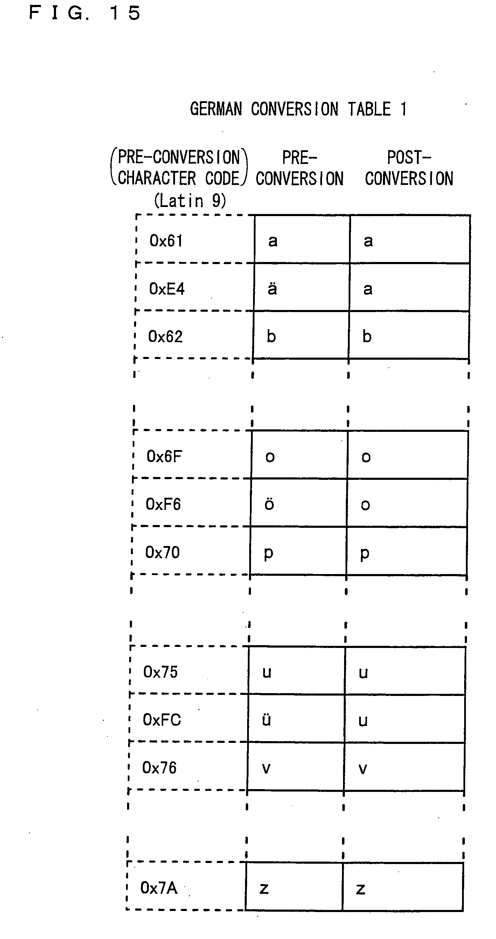

   Fig. 15 is a drawing illustrating an example of a German conversion table in the present invention.
Fig. 16

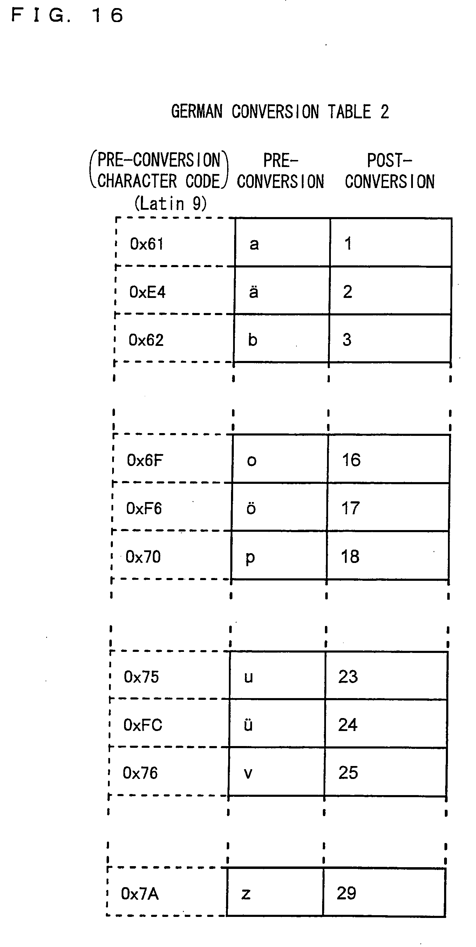

   Fig. 16 is a drawing illustrating an example of a German conversion table in the present invention.
Fig. 17

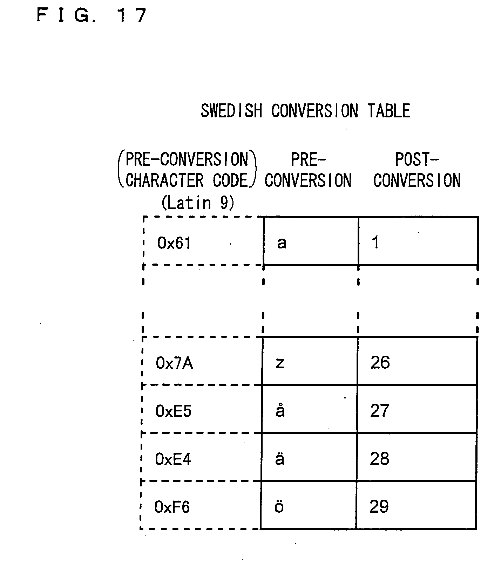

   Fig. 17 is a drawing illustrating an example of a Swedish conversion table in the present invention.
Fig. 18

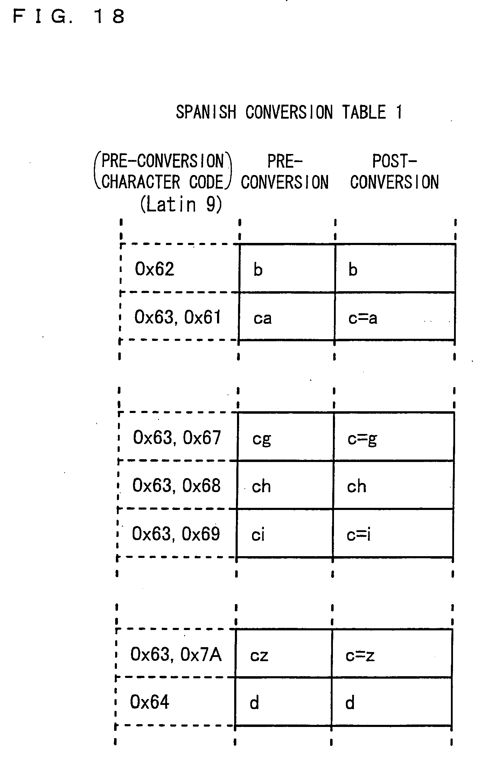

   Fig. 18 is a drawing illustrating an example of a Spanish conversion table in the present invention.
Fig. 19

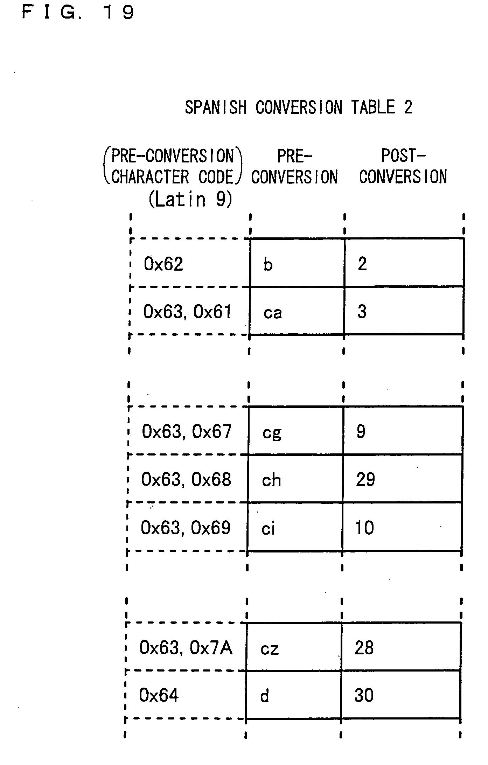

   Fig. 19 is a drawing illustrating an example of a Spanish conversion table in the present invention.
Fig. 20

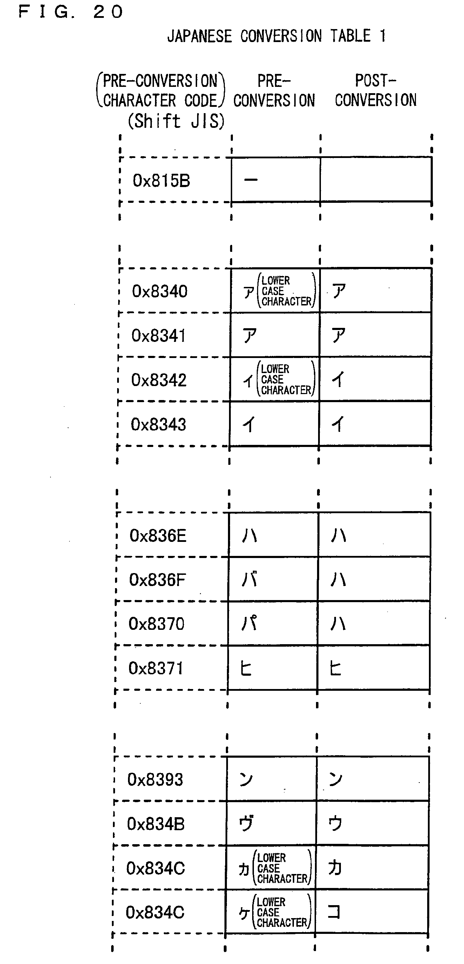

   Fig. 20 is a drawing illustrating an example of a Japanese conversion table of the present invention.
Fig. 21

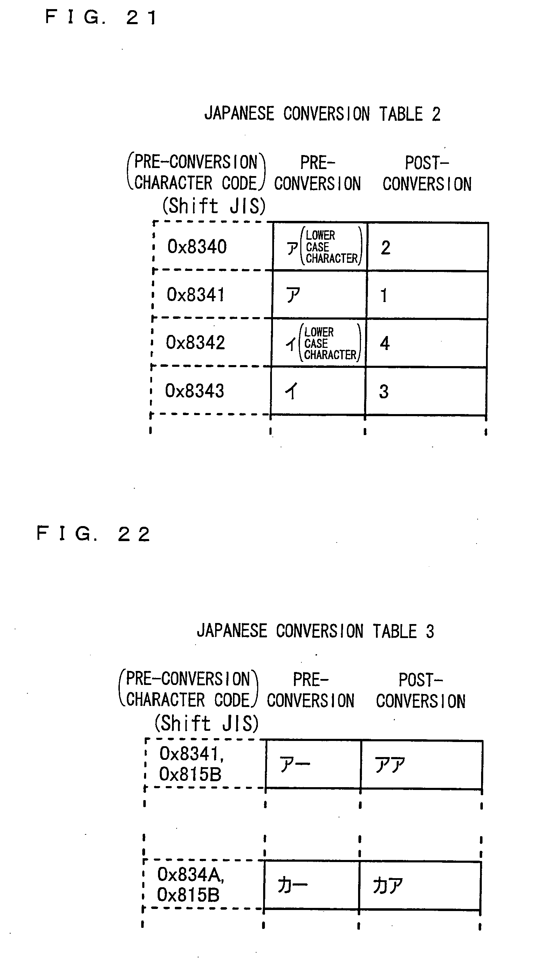

   Fig. 21 is a drawing illustrating an example of a Japanese conversion table of the present invention.
Fig. 22
   Fig. 22 is a drawing illustrating an example of a Japanese conversion table of the present invention.
Fig. 23

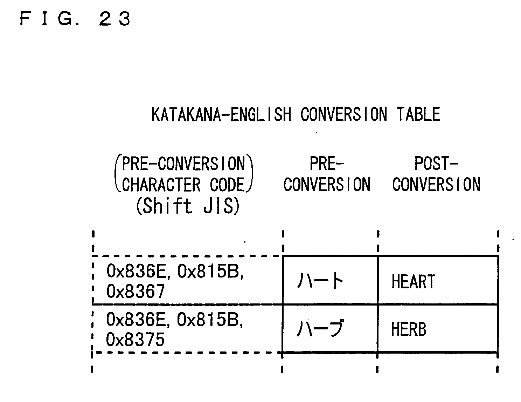

   Fig. 23 is a drawing illustrating a Katakana (phonetic Japanese character especially for foreign words) -English conversion table for converting Katakana into English.
Fig. 24

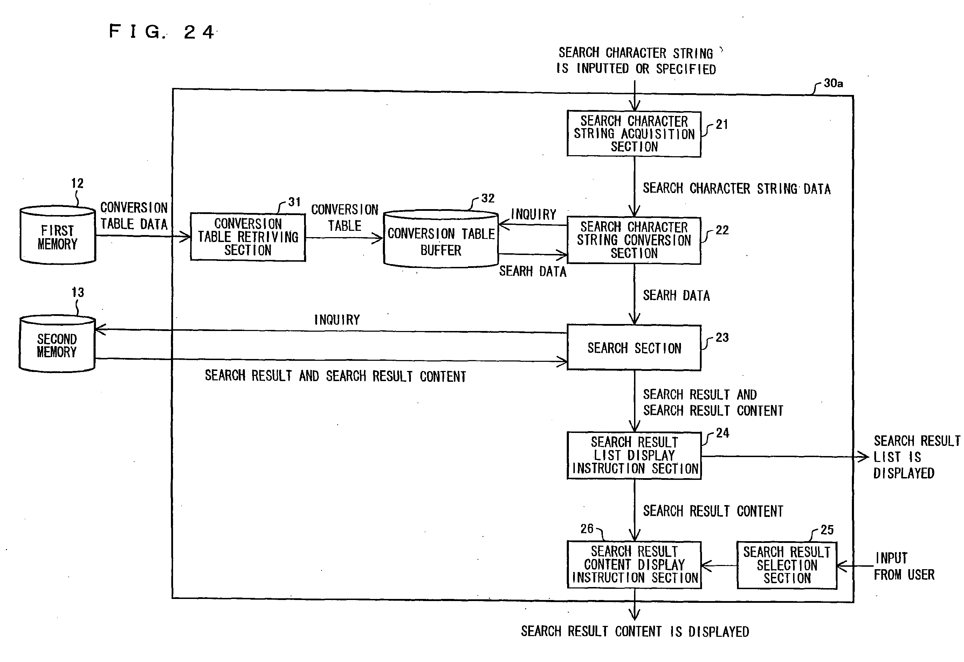

   Fig. 24 is a functional block diagram illustrating another embodiment of a search device of the present invention.
Fig. 25

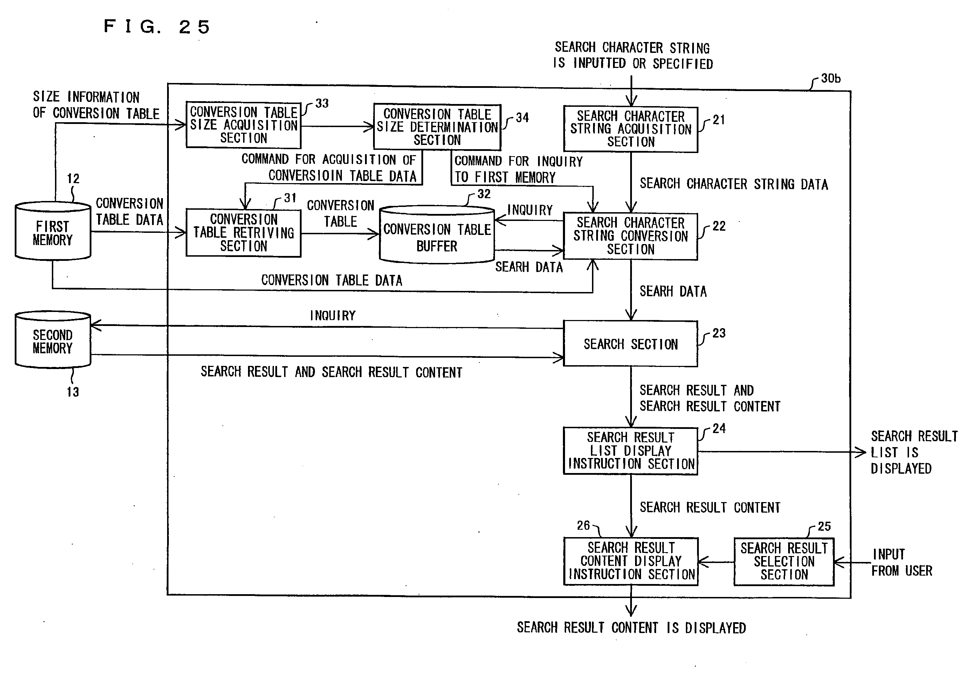

   Fig. 25 is a functional block diagram illustrating further another embodiment of a search device of the present invention.
Fig. 26

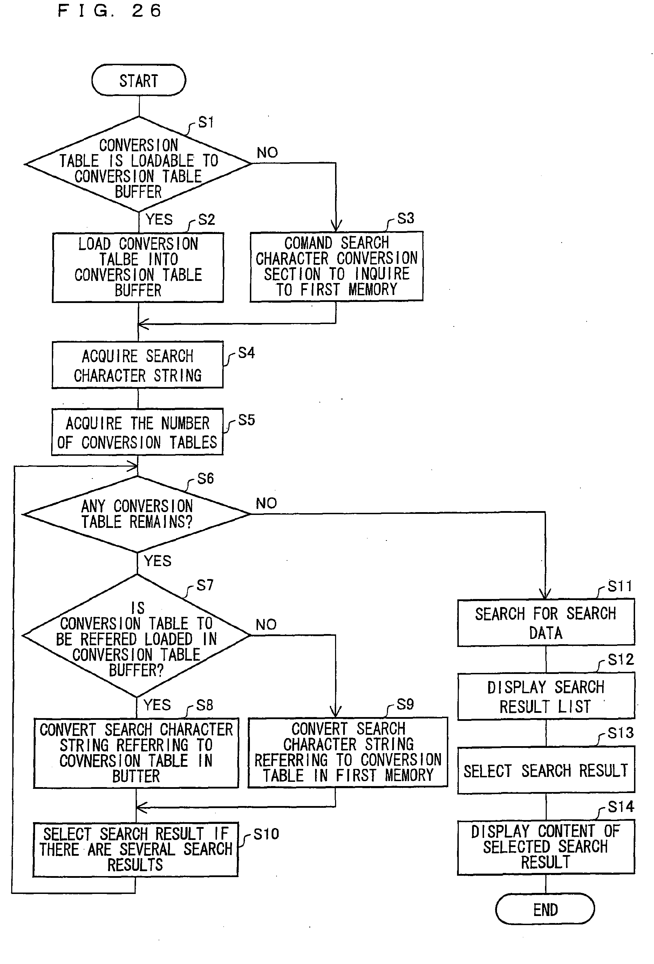

   Fig. 26 is a drawing illustrating an operation flow of a search device of the present invention in conducting a search.
Fig. 27

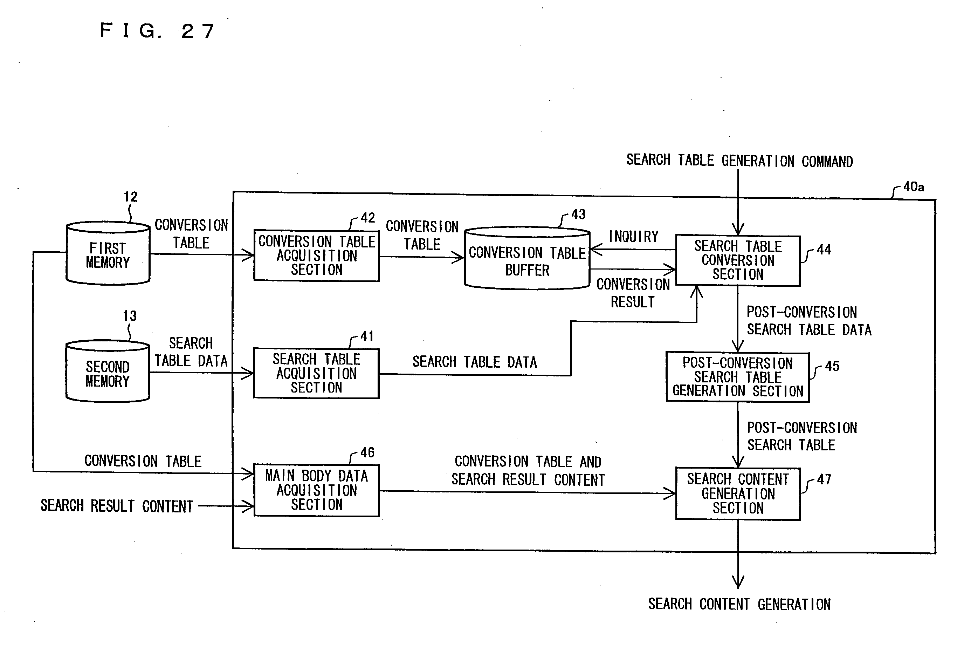

   Fig. 27 is a functional block diagram illustrating an embodiment of a search database generation device of the present invention.
Fig. 28

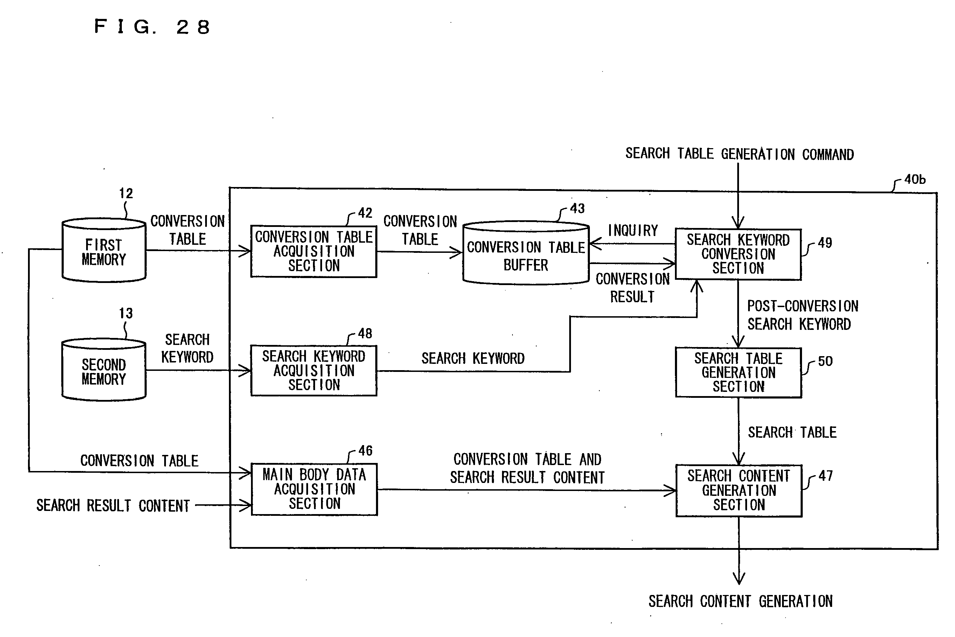

   Fig. 28 is a functional block diagram illustrating another embodiment of the search database generation device of the present invention.
Fig. 29

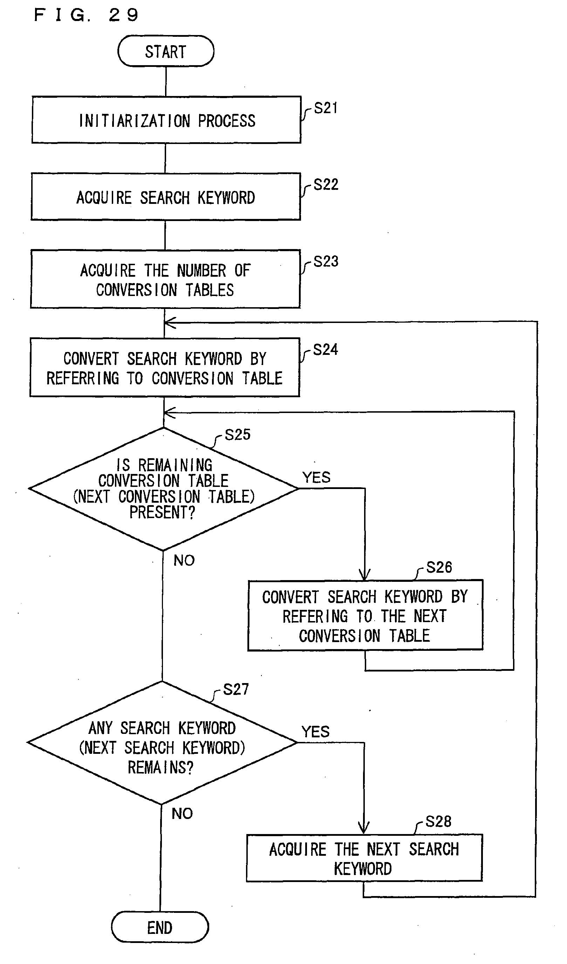

   Fig. 29 is an operation flow of the search database generation device of the present invention in converting a search keyword.
Fig. 30

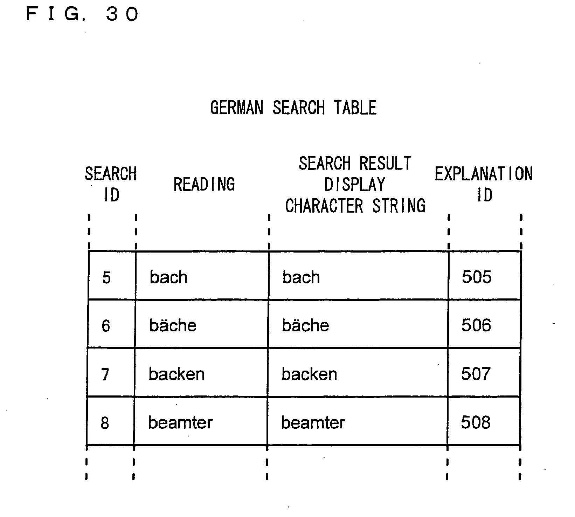

   Fig. 30 is a drawing illustrating an example of a German search table of the present invention.
Fig. 31

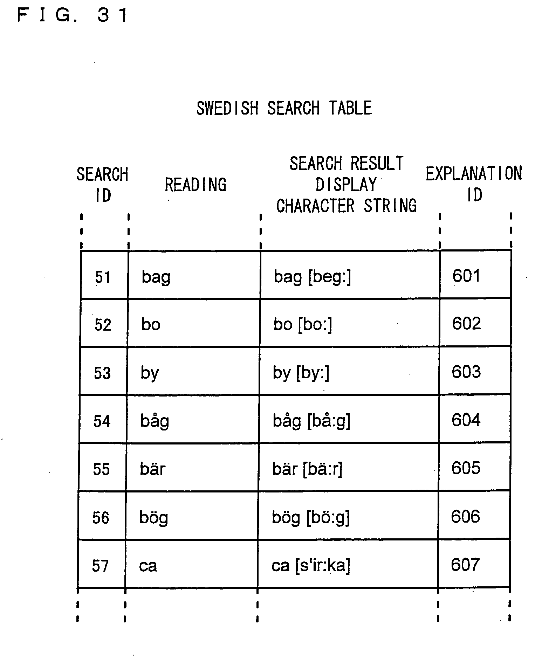

   Fig. 31 is a drawing illustrating an example of a Swedish search table of the present invention.
Fig. 32

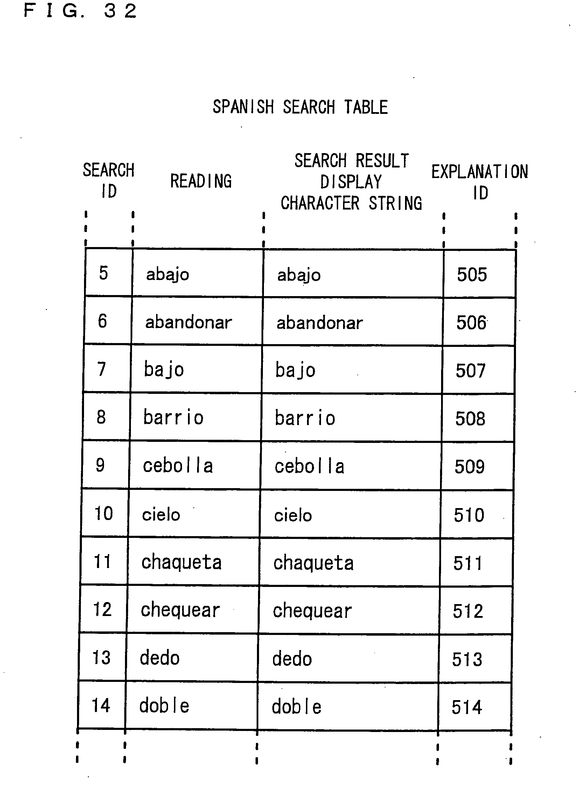

   Fig. 32 is a drawing illustrating an example of a Spanish search table of the present embodiment.
Fig. 33

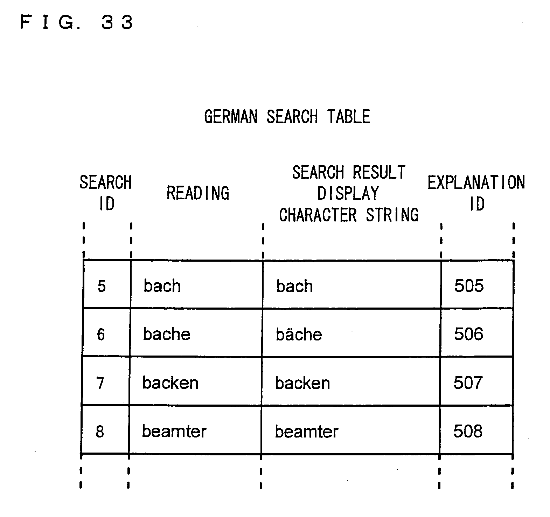

   Fig. 33 is a drawing illustrating a search table created by the search database generation device of the present invention based on the German conversion table in Fig. 15 and the German search table in Fig. 30.
Fig. 34

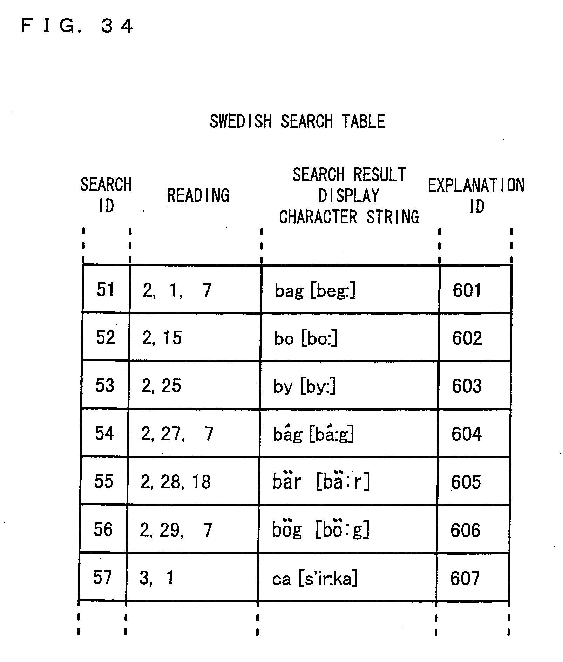

   Fig. 34 is a drawing illustrating a search table created by the search database generation device of the present invention based on the Swedish conversion table in Fig. 17 and the Swedish search table in Fig. 31
Fig. 35

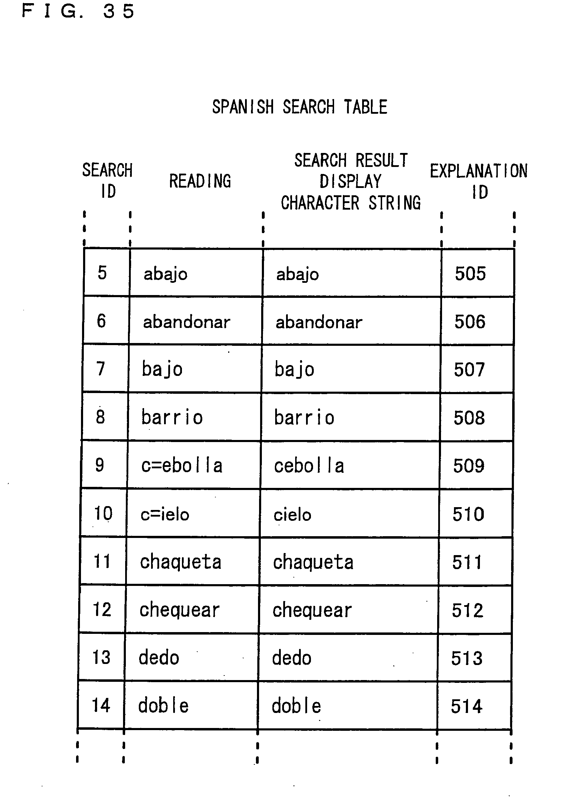

   Fig. 35 is a drawing illustrating a search table created by the search database generation device of the present invention based on the Spanish conversion table in Fig. 18 and the Spanish search table in Fig. 32.
Fig. 36

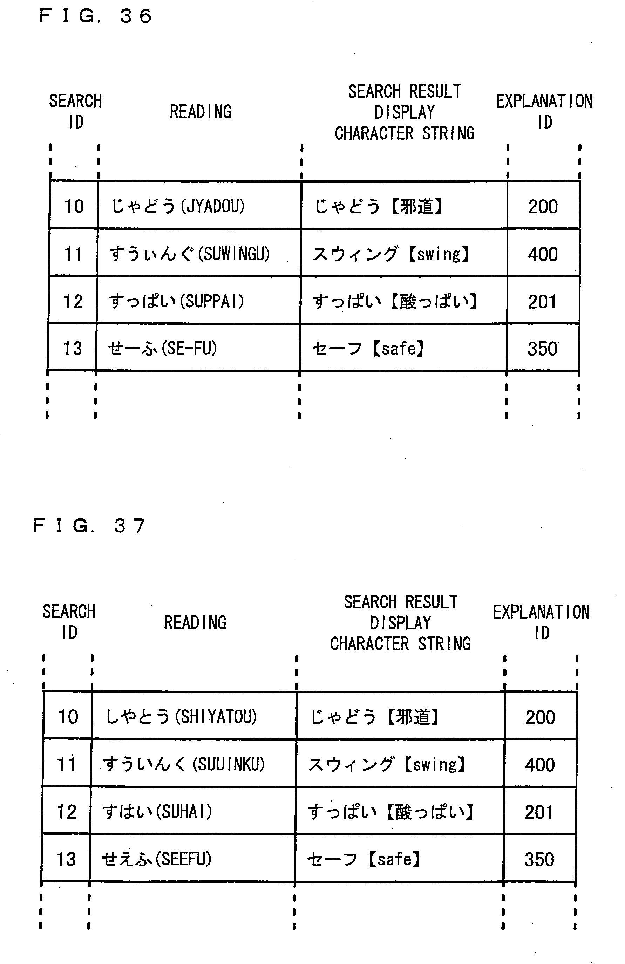

   Fig. 36 is a drawing illustrating an example of a Japanese search table of the present invention.
Fig. 37
   Fig. 37 is a drawing illustrating a search table created by the search database generation device of the present invention based on the Japanese search table in Fig. 36 and a Japanese conversion table for conducing predetermined normalization.

### Reference Signs List

- 1: Search device
   - 2: CPU
   - 3: Keyboard
   - 4: Mouse
   - 5: Microphone
   - 6: Tablet
   - 7: Main memory device
   - 8: Display (display means)
   - 9: Speaker
   - 10: External memory device (external recording medium)
   - 11: Communication device
   - 12: First memory (external recording medium)
   - 13: Second memory
   - 15: Bus
   - 21: Search character string acquisition section
   - 22: Search character string conversion section (conversion table inquiry means, conversion database inquiry means)
   - 23: Search section
   - 24: Search result list display instruction section
   - 25: Search result selection section
   - 26: Search result content display instruction section
   - 30a: Search device
   - 30b: Search device
   - 31: Conversion table retrieving section (conversion table retrieving means)
   - 32: Conversion table buffer (storage section)
   - 33: Conversion table size acquisition section (conversion table size acquisition means)
   - 34: Conversion table size determination section (conversion table size determination means)
   - 40a: Search table generation device (search database generation device)
   - 40b: Search table generation device (search database generation device)
   - 41: Search table acquisition section (search table data acquisition means, search database data acquisition means)
   - 42: Conversion table acquisition section (conversion table acquisition means, conversion database acquisition means)
   - 43: Conversion table buffer
   - 44: Search table converting section (search table data conversion means, search database data conversion means)
   - 45: Post-conversion search table generation section (search table generation means, search database generation means)
   - 46: main-body data acquisition section
   - 47: Search content generation section
   - 48: Search keyword acquisition section (search table data acquisition means, search database data acquisition means)
   - 49: Search keyword conversion section (search table data conversion means, search database data conversion means)
   - 50: Search table generation section (search table generation means, search database generation means)
   - 90: Input unit of a main body
   - 91: Display unit of a main body
   - 92: Direction key
   - 93: Direction key
   - 94: Enter key
   - 95: Character keys

### Description of Embodiments

### [Embodiment 1]

The following explanation deals with an embodiment of a search device 1 of the present invention with reference to Fig. 1 and Fig. 2.

First of all, a hardware arrangement of the search device 1 of the present embodiment is explained with reference to Fig. 2. Fig. 2 is a schematic view illustrating the hardware arrangement of the search device 1. As illustrated in Fig. 2, the search device 1 of the present embodiment includes a CPU 2, a keyboard 3, a mouse 4, a microphone 5, a tablet 6, a main memory 7, a display (display means) 8, a speaker 9, an external memory device 10, a communication device 11, and a bus 15.

The keyboard 3, the mouse 4, the microphone 5, and the tablet 6 are input devices for the search device 1. Specifically, a search character string is inputted (i) by typing the keyboard 3, (ii) by specifying the search character string in a document with the mouse 4, (iii) by picking up a voice with the microphone 5, or (iv) by hand-writing the search character string on the tablet 6. Such input devices are also used for selecting a search result among possible search results obtained by the search device 1.

The main memory 7 is a device for storing data and a program. The main memory 7 is a memory device which can perform a high-speed operation and is directly written or read by the CPU 2. It is not illustrated in Fig. 2, however, the search device 1 includes a sub-memory device for storing a program or the like. The main memory device 7 reads the program or the like from the sub-memory device and stores it temporarily. The sub-memory device can be realized by a ROM (Read Only Memory), a flash memory, or a hard disk. In addition, the sub-memory device can be realized by means which are used as the external memory device 10. Note that input of a search character string is not specifically limited to the above and can be performed in any way which is capable of inputting data. For example, a search character string may be inputted (i) via the communication device 11, (ii) by detecting the search character string in an image captured by a camera, (iii) by reading data of the search character string stored inside the external memory device 10, or (vi) by reading data of the search character string stored in a storage region for copy and paste data.

The display 8 and the speaker 9 are devices via which the search device 1 outputs information. Specifically, the display 8 displays (i) a search result content received from the CPU 2, or (ii) a screen image for selecting a search result among possible search results received from the CPU 2. The speaker 9 outputs audio data in a case where a search result content includes audio data or the like. Note that output of a search result is not specifically limited to the above and can be carried out in any way which is capable of outputting data. For example, search result data may be: (i) sent via the communication device 11, (ii) stored inside the external memory device 10, or (iii) stored in a storage region for copy and paste data.

Further, the external memory device 10 is a memory device which is provided outside of the search device 1 and stores information to be used in the search device 1. Further, as described above, the external memory device 10 may be used for an input of a search character string or output of a search result. Examples of the external memory device 10 encompass: a hard disk, a floppy (registered trademark) disk, an MO disc, a CD-R disc, a magnetic tape, a flash memory, and the like The communication device 11 is used for exchanging information through a network. The communication device 1 allows exchanging information via a network, for example, between the search device 1 and a server (external recording medium). In addition to the information used in the search device 1, a search character string may be inputted or a search result may be outputted through the communication device 11, as described before.

The CPU 2 is for (i) converting search character string data inputted via the input device into search data to be searched through the search table by referring to a conversion table (ii) searching for the search data through the search table, and (iii) outputting a search result. The CPU 2 is a device for carrying out a program which is stored in the main memory device 7. The conversion table and the search table will be later described in details.

The bus 15 is a common path for exchanging data among the CPU 2, the keyboard 3, the mouse 4, the microphone 5, the tablet 6, the main memory device 7, the display 8, the speaker 9, the external memory device 10, and the communication device 11.

In the present embodiment, the search device 1 includes the keyboard 3, the mouse 4, the microphone 5, tablet 6, the display (display means) 8, and the speaker 9. However, the arrangement of the search device 1 is not specifically limited to this. For example, the search device 1 may simply include the CPU 2, the main memory device 7, and the bus 15 without these input means.

The following explanation deals with an overview of an arrangement of the search device 1 with reference to Fig. 1. Fig. 1 is a functional block diagram illustrating an arrangement of the search device 1 according to the present embodiment.

As illustrated in Fig. 1, the search device 1 includes a search character string acquisition section 21, a search character string conversion section (conversion table inquiry means, conversion database inquiry means) 22, a search section 23, a search result list display instruction section 24, a search result selection section 25, and a search result content display instruction section 26. The search device 1, based on a predetermined data, makes an inquiry into (i) the first memory 12 (the first memory 12 may be the external memory device 10, the communication device 11, or the like. Generally, it is an external recording medium, however, the data of the first memory 12 may be copied in the main memory device 7 in some cases) or (ii) the second memory 13 (identical with the first memory 12 in terms of hardware arrangement), so that the search device 1 can acquire a result corresponding to the predetermined data.

The following explanation deals with the first memory 12 and the second memory 13 with reference to Fig. 3 through Fig. 5, before explaining an internal arrangement of the search device 1. Fig. 3 is a drawing illustrating a Kanji (Chinese character) - Kana (Phonetic Japanese) conversion table for converting a Kanji character string into a Kana character string. Fig. 4 is a drawing illustrating a conversion table for converting a Kanji character string into a search ID. Fig. 5 is a drawing illustrating a data structure of a search table.

The first memory 12 stores a conversion table. In the present application, the conversion table is a database which receives input data and provides output data corresponding to the input data. In the conversion table, for example, a predetermined conversion condition is defined in a row or column basis and data are arranged in rows or columns. In the conversion table, a search character string and search data are correlated to each other (in a predetermined data relationship). The conversion table of the present embodiment is a one-way conversion table for converting a search character string as an input into search data as an output. A search character string and search data are not always correlated to one by one, and may be correlated "N to 1". For example, in order to carry out normalization which is later described, it is necessary to prepare a conversion table for carrying out conversion such that both search character strings "A-" ("A" with a macron) and "A" are correlated to search data "A". On the other hand, a conversion table in Fig. 3 which is later described, carries out conversion such that a search character string " 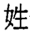 ". is correlated to search data "sei" and "kabane". As such, the relationship can be "N to 1", "1 to N", "N to N", or "1 to 1".

The above explained relationship is about a relationship between input and output. Basically, the conversion table can be realized as a conversion table based on "1 to 1" relationship. The "N to 1" relationship between input and output can be realized by preparing 2 rows of "1 to 1" relationship, for example, (i) a row for "A- to A" and (ii) a row for "A to A" (here, A- describes a prolonged sound of A). Similarly, the "1 to N" relationship between input and output can be realized by preparing 2 rows of "1 to 1" relationship, (i) a row for "" 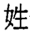 ." to sei" and (ii) a row for "" 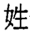 ." to kabane", and obtaining all data corresponding to the same search character string in a conversion process. Alternatively, the "1 to N" relationship between input and output can be realized by preparing one row for "" 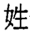 " to sei or kabane" and dividing output data into two "sei" and "kabane" through a data analysis.

Fig. 3 and Fig. 4 show a concrete data structure of the conversion table.

Fig. 3 is an example of the conversion table for converting Kanji into Kana. A column of "pre-conversion" includes Kanji character strings, and a column of "post-conversion" includes Kana character strings. Each of the rows represents each individual conversion. Basically, the conversion table requires these two columns at least. In addition, the conversion table may include ancillary data for improving processing speed as another data other than the conversion table, or as another column in the conversion table. A column of "pre-conversion character code" is added for a purpose of explanation. The "pre-conversion character code" indicates a hexadecimal Shift_JIS code representing each of the Chinese character(s) of a Chinese character string in the "pre-conversion" column. Generally, in an actual conversion table, the "pre-conversion" and "post-conversion" columns include character codes of the Chinese character strings. For your easy understanding, character strings are used in the "pre-conversion" and "post-conversion" columns, instead of using the numerical character codes. In general, the "pre-conversion" column is sorted on the character code. In a case of converting an input character string by referring to the conversion table, it is necessary to search for "pre-conversion" data that corresponds to the input character string. Therefore, it is possible to carry out a search faster by using a table sorted on the character code. The "pre-conversion code" column in Fig. 3 is sorted on the character code, so that "0×90, 0×A9", "0×90, 0×AB", and "0×90, 0×AB, 0×8A, 0×69" are arranged in this order.

Fig. 4 is substantially equal to Fig. 3, however, the "post-conversion" column is replaced with a "search ID" column which includes ID number data. Even though the name of the column is the "search ID", it includes converted data, like the "post-conversion" column in Fig. 3. A difference between these two tables is what kind of data format is used in searching through the search table based on the converted data, and further details will be explained with reference to Fig. 5. Namely, a conversion table does not always convert a character string into another character string, but carries out a conversion between predetermined data formats.

The second memory 13 stores a search table. In this description, the search table is a database in which predetermined data (search data) is correlated with predetermined information as a search result. In the search table, for example, the predetermined data and the predetermined information are correlated to each other in a row or a column basis and the search data and the predetermined information are arranged in rows or columns. An example of a concrete data structure of the search table is shown in Fig. 5.

A "search ID" column and a "reading" column in Fig. 5 include search data (input data), and a "search result display character string" column and an "explanation ID" column include search result data (output data). The "search ID" column in Fig. 5 is equivalent to the "search ID" column in Fig. 4. The "reading" column in Fig. 5 is equivalent to the "post-conversion" column in Fig. 3. Normally, the search table includes either the "search ID" column or the "reading" column. The search table is sorted on the "search ID" in numerical order or is sorted on the "reading" in the character code order. In a case of being sorted by the "reading", data length (i.e., a length of a character string) tends to be longer than data length of "search ID". Therefore, "search ID" sorting in numerical order allows conducting a search faster in general. The "search result display character string" is normally used for displaying a summary of a search result or a search result list. The "search result display character string" is not essential but normally contributes to create an easy-to-use search device. An "explanation ID" column includes link information linking to detailed data of a search result. The detailed data corresponding to the "explanation ID" can be stored in a format as shown in Fig. 7. It is also possible for the search table to include detailed data itself, instead of the link information.

The first memory 12 and the second memory 13 are described herein as if they are separated memories. However, it should be noted that the first memory 12 and the second memory 13 are independent function blocks. The first memory 12 and the second memory 13 are included in the external memory device 10.

The following explanation deals with an internal arrangement of the search device 1. The search device 1 includes a search character string acquisition section 21 which (i) acquires search character string data inputted through the keyboard 3, the mouse 4, the microphone 5, or the tablet 6, and (ii) sends the acquired search character string data to a search character string conversion section 22.

The search character string conversion section 22 acquires data for searching (search data) by making an inquiry to the first memory 12, based on search character string data received from the search character acquisition section 21. Specifically, the search character string conversion section 22 makes an inquiry into the first memory 12 so that the search character string data is converted into the search data by referring to the conversion table in the first memory 12. As a result, the search character conversion section 22 can acquire the search data. For example, by use of a conversion table in Fig. 3, a search character string " 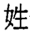 " is converted into search data "sei" or "kabane". On the other hand, by use of a conversion table in Fig. 4, the search character string " 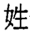 " is converted into search data "5" or "10" as a search ID. In the above cases, it is not necessary to use both conversion tables. Either one of them is required. It will be later described with referring to Fig. 6 and Fig. 8 that a process in a case of acquiring a plurality pieces of search data as shown in Fig. 3 or Fig. 4. The search character string conversion section 22 sends the search data thus acquired, to the search section 23.

The search section 23 acquires search result information (search result) by making an inquiry into the second memory 13 based on the search data received from the search character string conversion section 22. Specifically, the search section 23 makes an inquiry into the second memory 13 so that the search data is converted into a search result by referring to the search table in the second memory 13. As a result, the search section 23 acquires the search result. For example, in Fig. 5, the search data "kabane" or "5" is converted into a search result "kabane ( 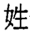 )"; and the search data "sei" or "10" is converted into a search result "sei ( 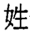 )". Further, the search section 23 sends the search result thus acquired to the search result list display instruction section 24.

The search result list display instruction section 24 causes the display 8 to display a search result received from the search section 23. Fig. 6 shows an example of a screen displayed on the display 8. Fig. 6 shows a display example of the display 8 as a result of a search conducted by the search device 1 based on a search character string " 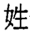 ". In Fig. 6, for example, (i) a search result list which have a reading "kabane" starting from "kabane ( 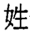 )", and (ii) a search result list which have a reading "sei" starting from "sei ( 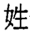 )" are displayed on the display 8 as a result of the search based on the search character string " 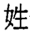 ".

The search result selection section 25 selects a search result from a search result list displayed on the display 8 according to an instruction of the search result list display instruction section 24. A content of the search result thus selected will be displayed. This selection made by the search result selection section 25 is operated by an instruction input from a user through the input device. Then the search result content display instruction section 26 causes the display 8 to display the content of the search result selected by the search result selection section 25. The content of the search result is, for example, shown in Fig. 7. Fig. 7 shows example data of search result contents that the explanation IDs in Fig. 5 indicate. More specific explanation will be given with reference to Fig. 5 and Fig. 7. For example, when a search result "kabane ( 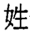 )" is selected by the search result selection section 25, the display 8 displays a content in Fig. 7 which content is indicated by an explanation ID "100" for the search result "kabane ( 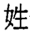 )". In addition to character data, a content of a search result may include image data, audio data, HTML (Hyper Text Markup Language) information, or the like.

In an example of Fig. 6, a search result list of "kabane" and a search result list of "sei" are displayed at the same time. The mouse or the tablet can directly select a desired search result from the search result lists. However, in a case where only direction keys are available, a focus usually appears on either one of the search result lists. For example, in Fig. 6, the search result "kabane ( 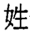 )" in the search result list "kabane" is shown in reversed display so that the focus is on the search result "kabane ( 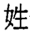 )". In order to shift the focus to another search result list "sei", another key for shifting the focus between the search result lists should be prepared in the search result list display. Alternatively, it can be dealt with pressing a plurality of keys at the same time.

In Fig. 6, the search result list "kabane" and the search result list "sei" are displayed at the same time. However, another way of selection or another way of display may be adopted as long as a user can select a search result. For example, a plurality of search result lists are displayed in a plurality of windows, respectively. These windows may be displayed overlapping one other and a tab key may be used for selecting each of the search result lists.

In the present embodiment, in a case where the search section 23 receives a plurality pieces of search data from the search character conversion section 22, the inquiry of the search section 23 is made more than once based on each of the plurality pieces of search data. However, the present invention is not specifically limited to this. For example, the plurality pieces of search data from the search character string conversion section 22 may be displayed on the display 8. This allows selecting a piece of search data to be sent to the search section 23 among the plurality pieces of search data. This can be realized by the search device 1 including a search data display instruction section for displaying on the display 8 a plurality pieces of search data received form the search character string conversion section 22, and a search data selection section for selecting a piece of search data to be sent to the search section among the plurality pieces of search data displayed on the display 8 according to an instruction of the search data display instruction section. The selection of the search data selection section is operated by an instruction input from a user through the input device. Fig. 8 shows a plurality pieces of search data displayed on the display 8. Fig. 8 shows an example of a display screen for selecting a piece of search data to be sent to the search section 23. Specifically, the display 8 displays a selection screen so that a user can select the search data "kabane" or the search data "sei", each of which is obtained by the search character string conversion section 22 based on the search character string " 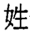 ". For example, in a case where the search data "sei" is selected on the display screen 8, the search section 23 makes an inquiry into the second memory 13 based on the search data "sei". As a result, search results shown in Fig. 9 are obtained. Fig. 9 shows example search results obtained in the search section 23, based on the search data "sei".

Further, in the present embodiment, one kind of conversion table is stored in the fist memory 12. However, the present invention is not limited to this. For example, the first memory 12 may include a plurality of conversion tables. In a case where the first memory 12 includes two kinds of conversion tables, a search character string is converted into search data by referring to a first conversion table, and the search data thus converted is further converted into new search data by referring to a second conversion table. As a result, the search section 23 receives the new search result. This allows carrying out various combinations of conversions. In such case, the conversion section 22 obtains the number of the conversion tables to be used for conversions, and then carries out a plurality of conversions.

Further, in a case where the first memory 12 includes a plurality kinds of conversion tables, it is possible to provide a plurality of search character string input modes to a user by selectively using the plurality kinds of the conversion tables to be used for conversions. For example, a user can choose a "Kanji and Kana" mode or a "Kana only" mode when entering a search character string into the search device 1.

The following explanation deals with concrete examples with reference to Fig. 10 through Fig. 13. Fig. 10 shows search results of the search device 1 which can deal with both (i) a Kana character string and (ii) a Kanji and Kana character string as a search character string. Fig. 11 shows search results of the search device 1 which can only deal with a Kana character string as a search character string. Fig. 12 shows search results of the search device 1 which can only deal with a Kanji and Kana character string as a search character string. Fig. 13 shows an outer appearance of an electronic display apparatus including the search device 1. The electronic display apparatus includes a display 8, a main-body input unit section 90, a main-body display unit section 91, direction keys 92 and 93, an Enter key 94, and character keys 95. The main-body input unit section 90 is a housing in which a keyboard 3 is included. The main-body display unit section 91 is a housing in which a display 8 is included. The search device 1 is provided in the main-body input unit section 90 and/or the main body display unit section 91.

As is shown in Fig. 10, an example of the search device 1 in Fig. 10 provides a selection of a search mode illustrated in Fig. 11 or a search mode illustrated in Fig. 12. As a concrete procedure, by reading data illustrated in Fig. 14, it is identified that there are two input boxes named "Kana only" and "Kanji and Kana". Accordingly, two input boxes for a search character string are displayed in a row for an input from a user. Then a user can select the "Kana only" mode or the "Kanji and Kana" mode by choosing either one of the two input boxes by use of the direction keys 92 and 93. For example, a focus on an input box is moved up or down by pressing the direction key 92 or 93 so that a selected input mode can be identified. Further, a user inputs a search character string by use of the character keys 95 or the like (a search character string may be inputted (i) by typing character keys directly, (ii) by typing character keys and conducting a Kana-Kanji conversion, or (iii) by copy and paste) and presses the Enter key 94. As a result, (i) when the "Kana only" mode is selected, a "Japanese conversion table 1" in Fig. 14 for converting Kana according to a predetermined normalization rule is used; (ii) when the "Kanji and Kana" mode is selected, a "Kanji-Kana conversion table 1" in Fig. 14 for converting Kanji into Kana and the "Japanese conversion table 1" are used. In a case where a plurality of conversion tables are used, such as the "Kanji and Kana" mode, conversions are carried out in a predetermined order. For example, Kanji " 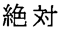 " is inputted as a search character string, the "Kanji-Kana conversion table" converts Kanji " 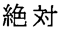 " into Kana "zettai", and then the "Japanese conversion table 1" converts "zettai" into "zetsutai". Note that in the present application, "Kana" can be "Hiragana (phonetic Japanese character)" or "Katakana (phonetic Japanese character especially for foreign words)" as long as a search a character string, a conversion table, and a search table are correlated one other either in "Hiragana" or "Katakana". A mere difference between "Hiragana" and "Katakana" is that "Katakana" is able to express a sound of "V".

In a case where a conversion unit for a conversion table is fixed by the number of characters or by the number of bytes, it may be defined as illustrated in Fig. 14. This is effective to determine whether a pre-conversion character string has corresponding data or not because the determination is carried out one to another according to the fixed conversion unit.

As described above, after converting a search character string into search data by referring to a conversion table which is selected by the search device 1, a search based on the search data is conducted. Then, a search result list is displayed on the display 8 in accordance with a sorting order in the search table. The search result list includes a search result corresponding to the search data and at least a former (anterior) search result or a latter (posterior) search result in the search table. It is also possible to display only a search result corresponding to the search data in the search result list. In order to display a content of a search result, a user can select a search result that you want to see its content from the search result list by use of the direction key 92 or 93, and press the Enter key 94. As a result, the search device 1 displays the content of the search result selected by the user on the display 8.

In a case of obtaining a search character string from a storage region of copy and paste data, it is hard to identify the search character string includes "Kana only", or "Kanji and Kana". In such a case, when a conversion table for the "Kanji and Kana" mode includes a conversion table for the "Kana only" mode, you should select the "Kanji and Kana" mode. Alternatively, searches may be conducted in both of the "Kana only" mode and the "Kanji and Kana" mode, and a plurality of search result lists thus obtained may be displayed adjacently as illustrated in Fig. 6.

As an example of the "Kana and Kanji" mode in Fig. 14, it is possible to use one integrated conversion table instead of using a plurality of conversion tables. Further, the integrated conversion table can be integrated in a search table so that the conversion table is not necessary. Without using a conversion table, it is necessary to use two search tables, (i) a search table including "Kanji and Kana" search data and (ii) a search table including "Kana only" search data. By using the "Kanji-Kana conversion table 1", however, only a Kana search table is necessary. In addition to a conversion "Kanji" into "Kana", for example, by preparing a conversion table between different languages such as an English-Japanese conversion table and a Japanese search table, it is easily possible to provide a Japanese definition in response to an input in English. Namely, it is easy to have versatility by changing a combination between a conversion table and a search table. Even if combinations of the tables are limited, it is easy to obtain or purchase new data and is also easy to try out the new data, because each of the conversion tables and the search tables is independent and simple.

With reference to Fig. 14 and Fig. 22, the following explanation deals with a conversion process for converting a search character string into search data by referring to a conversion table. Fig. 14 shows an example of a data structure in a conversion process. A conversion table shown in Fig. 22 is a Japanese conversion table 3 which carries out a conversion in accordance with a predetermined normalization rule. In the present embodiment, a search character string is converted with respect to "the number of characters as one conversion unit" in Fig. 14. For example, consider a case where a search character string, " 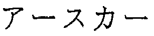 (A- Su Ka-)" ("-" is a macron indicating a long vowel), is to be converted by referring to the conversion table in Fig. 22. In this case, the conversion table tries to convert the search character string one unit to another, such as " 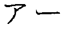 (A-)", " 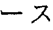 (-Su)", " 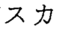 (Suka)", and " 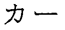 (Ka-)". When a first unit has corresponding search data in the conversion table, the first unit is converted into the corresponding search data. Then a second unit which is one letter shifted from the first unit is skipped. In a case where the first unit does not have corresponding search data in the conversion table, the first unit is not converted. Then the second unit which is one letter shifted from the first unit is tried to be converted. In the above example, the first unit " 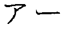 (A-)" is converted into " 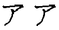 (AA)"; the second unit " 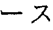 (-Su)" is skipped; the third unit " 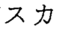 (Suka)" has no corresponding search data, thereby being left as it is; and the fourth unit " 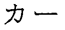 (Ka-)" is converted into " 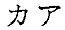 (KaA)". As a result of all of the conversions, " 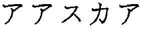 (A A Su Ka A)" is obtained.

Note that one conversion unit is not limited to be defined by "the number of characters", but it can be defined by "the number of bytes". Further, a conversion unit may have a flexible length instead of a fixed length. In such a case, a search character string is divided into several units so that each unit is shifted by one letter or one byte. Then the longest character string corresponding to search data is to be found so as to be converted into the search data as a first unit. In a case where the first unit has corresponding search data, a second unit starting from the following letter is to be searched whether it has corresponding search data or not. If the second unit has no corresponding search data, the second unit is shifted by one letter or one byte so as to find corresponding search data. The data structure in Fig. 14 is one example, and "the number of characters as one conversion unit" can be included in the conversion table. If it is not necessary to have a flexible unit for a conversion, a fixed unit for a conversion may be set in a program, so that the "the number of characters in one unit for a conversion" row in Fig. 14 is not necessary. It is more effective to carry out a conversion in every unit including N characters. However, if there is no possibility of error conversion, a search character string may be converted one character to another, or one byte to another.

In the present embodiment, after a search result list is displayed, a search result is selected by the search result selection section 25 so that a content of the selected search result is displayed on the display 8 according to an instruction of the search result content display instruction section 26. However, the present invention is not limited to this. For example, when a search result list is displayed on the display 8 according to an instruction of the search result list display instruction section 24, a content of a top search result may be also displayed at the same time. In this case, the search result display may be then changed in response to a selection of a search result.

The search device 1 of the present invention (i) converts inputted data into search data by referring to a conversion table, the search data being searchable through a search table, and (ii) searches for the search data thus converted through the search table. In the conversion table, a predetermined conversion condition is defined in a row or column basis and data are arranged in rows or columns. In the search table, the search data and predetermined information as search results are correlated to each other in a row or column basis and the search data and the predetermined information are arranged in rows or columns. The search device 1 may include a search character string conversion section 22 for acquiring the search data by referring to the conversion table based on the inputted character string, the conversion table being stored in the first memory 12 which is connectable to the search device.

According to the above arrangement, the search device 1 acquires search data by referring to a conversion table. Therefore, in a case where the conversion table to be used is changed, it is also possible to acquire search data in the same manner by referring to the conversion table thus changed. Namely, it is not necessary to revise a processing program of the search device 1 in a case of changing the conversion table. Further, since the search device 1 of the present invention refers to the conversion table stored in the first memory 12, it is possible to change the conversion table by changing the first memory 12 to be referred to. This makes it easy to change the conversion table. As a result, the search device 1 of the present invention has better versatility and expansibility.

Especially, in a case where a conversion table or a conversion table and a search table should be changed in order to arrange search results in a desired order, the present invention is useful. The following explanation deals with a sorting order of search results with reference to Fig. 15 and Fig. 30. Fig. 15 is a drawing illustrating an example of a German conversion table. Fig. 30 is a drawing illustrating an example of a German search table.

For example, when search data "ba*che" is searched through the German search table shown in Fig. 30, a search result of "ba*che" is not displayed between "bach" and "backen" as an order in a normal dictionary. The order may be determined in accordance with a character code of ISO8859-15 (Latin Alphabet No. 9), for example. According to the above character code, "a*" (character code: 0 × E4) is not located between "a" (character code: 0 × 61) and "b" (character code: 0 × 62), but is located behind "z" (character code: 0 × 7A). As a result, the search result of "ba*che" searching through the German search table shown in Fig. 30 is not displayed at a position between "bach" and "backen" as an order in a normal dictionary, but is displayed way behind than that position. This makes a user to be confused in a case where an order of the search result is different from an order in a normal dictionary. Note that "a*" is supposed to be replaced with a ligature 1. Also, "a*" in the following explanation should be replaced with the ligature 1.
ä ...... ligature 1

The foregoing problem can be easily solved by using a conversion table as shown in Fig. 15 and a search table which includes search data to be obtained by the conversion table in Fig. 15 as its own search data. Namely, search data in which umlauts are removed is prepared by carrying out a conversion for removing umlauts from a search character string by referring to a conversion table in Fig. 15. Then, based on the search data thus prepared, a search is conducted through a search table including search data character strings in which umlauts are removed. As a result, the search result of "ba*che" is displayed between "bach" and "backen" same as an order in a normal dictionary. This causes no confusion to a user.

When an existing search table which is equivalent to "the search table including search data character strings in which umlauts are removed" is available, it is necessary to create a conversion table only. When only a search table including umlauts is available, search data in the search table should be converted by referring to the conversion table so as to create a new search table. It will be later described how to create a new search table.

As described above, the arrangement of the present invention has an advantage in that search results can be sorted in a desired sorting order without changing the processing program in the search device 1.

Other than the conversion table in Fig. 15, the following explanation deals with another example of a conversion table which can sort search results in a desired sorting order with reference to Fig. 16 through Fig. 19 and Fig. 21. Fig. 16 is a drawing illustrating an example of a German conversion table. The conversion table in Fig. 16 is a German conversion table 2 in which a conversion condition is defined such that a character is converted into a combination of numbers. Fig. 17 is a drawing illustrating an example of a Swedish conversion table. Also in the conversion table in Fig. 17, a conversion condition is defined such that a character is converted into a combination of numbers. Fig. 18 is a drawing illustrating an example of a Spanish conversion table. The conversion table in Fig. 18 is a Spanish conversion table 1 in which a conversion condition is defined such that a dummy code is placed between "c" and the following letter except a Spanish ligature "ch". Fig. 19 is a drawing illustrating an example of a Spanish conversion table. The conversion table in Fig. 19 is a Spanish conversion table 2 in which a conversion condition is defined such that a character is converted into a combination of number. Further, Fig. 21 is a drawing illustrating an example of a Japanese conversion table. The conversion table in Fig. 21 is a Japanese conversion table 2 in which a conversion condition is defined such that a character is converted into a combination of numbers.

The German conversion table 2 in Fig. 16 allows search results to be displayed in numerical order converted from the character code. Thus, the German conversion table 2 in Fig. 16 allows search results to be displayed in a desired order in accordance with a number allotted to each character including a ligature.

Further, as is shown in the conversion table in Fig. 17, Swedish has ligatures such as "a#" or "a*". The ligature in the present application is a character made up of two or more joined letters. The umlaut in German is one example. In addition to the umlaut, each of the languages has a unique ligature in many cases. Note that "a#" is supposed to be replaced with a ligature 2. "a#" in the following explanation should be also replaced with the ligature 2.
å ... ... ligature 2

In Swedish, there is a problem regarding an order of search results caused by the ligatures. The problem in Swedish is equivalent to that in German caused by the umlaut. In Swedish, for example, "a#" has a character code 0 × E5; and "a*" has a character code 0 × E4. According to the character code, "a*" and "a#" are arranged in this order. In a Swedish dictionary or the like, however, "a#" comes before "a*". The Swedish conversion table in Fig. 17 allows search results to be displayed in numerical order converted from the character code. In the above example, "a#" is converted into "27", and "a*" is converted into "28" by the conversion table. As a result, a search result of "a#" comes before a search result of "a*" by use of a search table including search data corresponding to the conversion table. Accordingly, it is possible to sort search results in a desired order according to a number allotted to each of the characters including the ligatures by use of the Swedish conversion table in Fig. 17 in combination with the search table including search data corresponding to the Swedish conversion table.

Note that there are some tables that convert a character into a number in the present embodiment; however, the number is used for easy understanding. In an actual case, it is better to use one character such as "a" instead of a number. In Fig. 17, for example, "a#" should be converted into "{}" (character code: 0 × 7B) and "a*" should be converted into "|" (character code: 0 × 7C). This is applicable to the other conversion tables in the present embodiment.

Further, as is shown in a conversion table in Fig. 19, "ch" can be treated as one word in Spanish. Therefore, there is a possibility to have a similar problem regarding an order of search results as above described. Specifically, "ch" is located between "c" and "d" in a normal dictionary, and words are arranged in the following order, "cry...", "cz...", "ch...", "d...", and "e...". On the other hand, in a case where a sort is conducted in accordance with the character code only, a sorting order is cg...", ch...", ci...", ..., cz...", and d...".

For example, "cz" in Spanish has a character code 0 × 63, 0 × 7A; "ch" has a character code 0 × 63, 0 × 68. According to the character code, "ch" comes before "cz". As described above, "cz" is followed by "ch" in a normal Spanish dictionary. The Spanish conversion table 2 in Fig. 19 allows search results to be displayed in numerical order converted from the character code. In the above example, "cz" is converted into "28" and "ch" is converted into "29" by the conversion table. As a result, a search result of "cz" comes before a search result of "ch" by use of a search table including search data corresponding to the conversion table. Accordingly, it is possible to sort search results in a desired order according to a number allotted to each of the characters by using the Spanish conversion table 2 in Fig. 19 in combination with the search table including search data corresponding to the conversion table.

Alternatively, it is also possible to use the Spanish conversion table 1 in Fig. 18 as a conversion table which can solve the problem regarding the order of search results caused by a special character such as "ch" in Spanish. The Spanish conversion table 1 in Fig. 18 allows a search data character string including "c" and the following character to have a dummy code "=" (character code: 0 × 3D) between "c" (character code: 0 × 63) and the following character except a Spanish ligature "ch". The search data character string corresponds to a search result character string. According to the character code, the dummy code comes before an alphabet when search results are displayed. As a result, it is possible to display search results such that a search result of a word including "c" and the following letter comes before a search result of a word including "ch".

In the present embodiment, the German ligature, Swedish ligatures, and "ch" in Spanish are explained. However, special characters are not limited to these. In addition to the above ligatures, for example, French has a ligature made up of "o" and "e"; Icelandic, Danish, and Norwegian have a ligature made up of "a" and "e"; Finnish, Danish, and Norwegian have a ligature "0$ (o$)"; and Dutch has a ligature "IJ (ij)". Note that "0$ (o$)" is supposed to be replaced with the following ligature 3.
Ø (ø) ...... ligature 3

Regarding the above ligatures in French, Icelandic, Danish, Finnish, and Dutch, it is also possible to arrange search results in a desired order by use of conversion tables which are equivalent to the conversion tables in Fig. 16 through Fig. 19.

In addition to ligatures, Japanese has upper case characters and lower case characters (representing "contracted sound" or "glottal stop"). In order to solve a problem regarding an order of search results caused by the difference between the upper case characters and the lower case characters, a Japanese conversion table 2 shown in Fig. 21 can be used. For example, in a normal Japanese dictionary, the lower case characters such as "contracted sound" or "glottal stop" are located behind the upper case characters. (For example, " 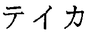 (Te I Ka)" is followed by " 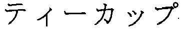 (Thi-Kappu)".) However, "contracted sound" and "glottal stop" comes before the upper case letter according to the character code. (e.g., " 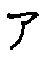 " (character code: 0 × 8340), " 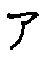 " (character code: 0 × 8341)) This causes a problem regarding an order of search results caused by the difference between the upper case characters and the lower case characters in Japanese. To solve this problem, the Japanese conversion table 2 in Fig. 21 allows search results to be displayed in numerical order converted from the character code. For example, a lower case character " 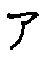 " and an upper case character " 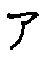 " are arranged in this order according to the character code, as described above. However, the Japanese character conversion table 2 in Fig. 21 allows search results to be displayed in numerical order converted from the character code. The Japanese conversion table 2 converts " 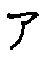 " into "2", and " 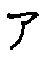 " into "1". As a result, a search result of " 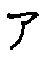 " comes before a search result of " 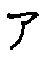 " by use of the a search table including search data corresponding to the Japanese conversion table 2. As such, the Japanese conversion table 2 in Fig. 21 in combination with a search table including search data corresponding to the Japanese conversion table 2 allows search results to be displayed in a desired order according to the number allotted to each Japanese character.

In addition to a conversion table for arranging search results in a desired order, a conversion table for normalization of a character string can be also used in the search device 1. The following explanation deals with a conversion table for normalization of a character string with reference to Fig. 20, Fig. 22, and Fig. 23. The normalization in the present application is for limiting character codes in search data by converting a character (string) into another character (string).

Fig. 20 shows a Japanese conversion table 1 which carries out conversion in accordance with a predetermined normalization rule. The Japanese conversion table 1 in Fig. 20 carries out the normalization such that (i) a lower case character is converted into an upper case character, (ii) a dull sound character or a p-sound character is converted into a clear sound character. It is possible to normalize (i) a lower case letter representing "contracted sound" or "glottal stop" into an upper case letter, and (ii) a dull sound character or a p-sound character into a clear sound character by use of the Japanese conversion table 1 in Fig. 20. Further, the conversion table in Fig. 22 is a Japanese conversion table 3 which carries out a conversion in accordance with a predetermined normalization rule. The Japanese conversion table 3 in Fig. 22 is a conversion table which converts a prolonged sound character into a vowel character as normalization. It is possible to normalize a prolonged sound character into a vowel character by use of the Japanese conversion table 3. Alternatively, it may be possible to carry out the normalization by eliminating a macron, or prolonged sound mark. For example, " 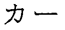 " is converted into " 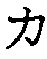 ".

In a case where data of the above conversion table is stored in a program without using a technique of the present invention, a problem arises in that the conversion table is fixed and is not able to be changed to a desired table according to content data (e.g. later described search contents data). In a case where a plurality of conversion tables are stored in the program, a desired conversion table may be selected according to content data. However, it is not possible to select a conversion table other than the preliminarily stored conversion tables. This arrangement is workable in case it is possible to predict in advance which conversion table is to be used. However, it is almost impossible to research all the sorting orders and conversions, each of which is unique to a language or a dictionary, for example the ligatures and normalization rules described above, and store them in the program as conversion tables. It may be possible to revise the program whenever a new conversion table is added. In some cases, however, it is not possible to revise the program or it may be costly to revise the program. According to the present invention, a conversion table is stored as a content, so that it is not necessary to store the conversion table in the program and revise the program. This allows the search device to have a wide variety of contents.

Fig. 23 shows a Katakana (phonetic Japanese character especially for foreign words)-English conversion table which carries out conversion in accordance with a predetermined conversion rule. The Katakana-English conversion table in Fig. 23 is for converting a Katakana character string into an English character string. For example, a Katakana character string and an English character string are correlated to each other in the conversion table so that a Katakana character string " 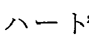 " is converted into an English character string "heart", for example. Therefore, it is possible to convert a Katakana character string which represents an English word in Japanese is converted into an English character string. Further, a character string in the conversion table and search data can be arbitrarily correlated to each other. For example, a Katakana character string " 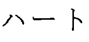 (heart)" can correspond to another Katakana character string " 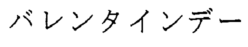 (Valentine's day)" which is a word related to a "heart". As such, a conversion table can be used for converting inputted data into related data. Therefore, in addition to sort search results in a desired order or conduct normalization, it is also possible to provide a new usage such as conducting a search based on data which is related to inputted data.

Further, the search device of the present invention includes display means for displaying search results. It is preferable that the search result and its former and latter data in the search table are displayed in a row on the display means.

This allows the search data obtained by the search device 1 and its former and latter data in the search table are displayed in a row on the display 8.

### [Embodiment 2]

The following explanation deals with embodiments of a search device 30a and a search device 30b in the present invention with reference to Fig. 24 through Fig. 26. Note that a structure not described in the following explanation is the same as the embodiment 1. For the sake of convenience in explanation, a member which has the same function of a member illustrated in drawings of the embodiment 1, has the same reference number and its explanation is omitted.

The search device 30a of the present embodiment and the search device 1 of the embodiment 1 are different in that the search device 30a further includes a conversion table retrieving section 31 and a conversion table buffer 32, in addition to the arrangement of the search device 1. On the other hand, the search device 30b of the present embodiment is also different from the search device 1 of the embodiment 1. In addition to the arrangement of the search device 1, the search device 30b further includes a conversion table retrieving section 31, a conversion table buffer (storage section) 32, a conversion table size acquisition section (conversion table size acquisition means) 33, and a conversion table size determination section (conversion table size determination means) 34. Note that the search devices 30a and 30b have the same hardware arrangement as the one in the search device 1 illustrated in Fig. 2.

First, an overview of an arrangement of the search device 30a is described with reference to Fig. 24. Fig. 24 is a functional block diagram illustrating an arrangement of the search device 30a of the present embodiment. As illustrated in Fig. 24, the search device 30a further includes the conversion table retrieving section 31 and the conversion table buffer 32 in addition to the arrangement of the search device 1.

The conversion table retrieving section 31 is for retrieving a conversion table from the first memory 12 so as to send it to the conversion table buffer 32. The conversion table buffer 32 is for storing (loading) the conversion table received from the conversion table retrieving section 31. Since the conversion table buffer 32 is a so-called cache for the first memory 12, the conversion table buffer 32 should be accessible faster than the first memory 12. Therefore, the conversion table buffer 32 can be realized by a data-rewritable memory device (RAM) or the like.

Next, an overview of an arrangement of the search device 30b is described with reference to Fig. 25. Fig. 25 is a functional block diagram illustrating an arrangement of the search device 30b of the present embodiment. As illustrated in Fig. 25, in addition to the arrangement of the search device 1, the search device 30b further includes the conversion table retrieving section 31, the conversion table buffer 32, the conversion table size acquisition section 33, and the conversion table size determination section 34.

The conversion table retrieving section 31 is for retrieving a conversion table so as to send it to the conversion table buffer 32 according to an instruction from the conversion table size determination section 34. The conversion table buffer 32 is for storing (loading) the conversion table which is received from the conversion table retrieving section 31.

The conversion table size acquisition section 33 is for acquiring information which indicates a size of the conversion table stored in the first memory 12. Examples of the information encompass: the number of pieces of data stored in the conversion table, the total amount of data stored in the conversion table, frequency of use of the conversion table, or priority order of the conversion table. In a case where the conversion table is flagged to indicate the size of the conversion table, the conversion table size acquisition section 33 may acquire information regarding presence or absence of the flag, so that the information can be used as the information indicating the size of the conversion table.

Based on the conversion table size information received from the conversion table size acquisition section 33, the conversion table size determination section 34 determines whether the conversion table data is loadable into the conversion table buffer 32 or not (whether the flag is On or Off). For example, based on the conversion table size information, the conversion table size determination section 34 determines whether the size of the conversion table is within a capacity of the conversion table buffer 32 or not. In a case where the conversion table is flagged to indicate the conversion table size, the determination is made depending on whether the flag is present or absent. A conversion table size determined as being loadable sizewise may be determined as unloadable in a case where its frequency of use or priority is low. The frequency of use or priority can be a fixed value, or can be revised (i) based on user's use frequency record for each table or (ii) based on statistics of use frequencies of many users obtained through a network.

In a case where the conversion table data is determined as loadable into the conversion table buffer 32, the conversion table size determination section 34 instructs the conversion table retrieving section 31 to retrieve the conversion table data from the first memory 12 so as to send it to the conversion table buffer 32. In this case, the conversion table size determination section 34 sends a command to the search character string conversion section 22 to make an inquiry into the conversion table buffer 32.

In a case where the conversion table data is determined as unloadable into the conversion table buffer 32, the conversion table size determination section 34 instructs the search character string conversion section 22 to make an inquiry into the first memory 12. In this case, the search character string conversion section 22 makes an inquiry into the first memory 12 based on the search character string, in the same manner as the search character conversion section 22 does in the search device 1.

In the present embodiment, the conversion table is loaded into the conversion table buffer 32 depending on its size. However, the way is not limited to this. For example, it is possible to further include a search table buffer so that a search table is loaded into the search table buffer depending on a size of the search table. Further, instead of loading a whole conversion table and/or a whole search table, a portion of the conversion table and/or the search table may be loaded into respective buffers. For example, a portion of the conversion table which is frequently used may be loaded into the buffer as a cache.

The following explanation deals with a search operation flow of the search device 30b with reference to Fig. 26. Fig. 26 is an operation flow of the search device 30b of the present embodiment in conducting a search.

In step S1, the conversion table size determination section 34 determines whether a conversion table is loadable into the conversion table buffer 32 or not. The conversion table is stored in the first memory 12 and is used for converting a search character string. In a case where the conversion table is determined as loadable into the conversion table buffer 32 (step S1 is Yes), the routine proceeds to S2. In a case where the conversion table is determined as unloadable into the conversion table buffer 32, the routine proceeds to S3.

In step S2, the conversion table retrieving section 31 loads into the conversion table buffer 32 all the conversion tables which are determined as loadable by the conversion table size determination section 34, then the routine proceeds to step S4. In step S3, the conversion table size determination section 34 instructs the search character string conversion section 22 to make an inquiry into the first memory 12 when the search character string conversion section 22 should make an inquiry (command for inquiry to the first memory), and then the routine proceeds to step S4. In a case where a conversion table which is loadable into the conversion table buffer 32 and a conversion table which is unloadable into the conversion table buffer 32 coexist in the first memory 12, both step S2 and step S3 are carried out.

Next, in step S4, the search character string acquisition section 21 acquires a search character string, and then the routine proceeds to step S5. In step S5, the search character string conversion section 22 acquires information regarding the number of the conversion tables, and then the routine proceeds to step S6.

In step S6, the search character string conversion section 22 determines whether a conversion is carried out or not. According to the number of the conversion tables, the search character string conversion section 22 detects whether or not there is a remaining table which is not used for the conversion (next conversion table). In a case where the next conversion table is present (step S6 is Yes), the routine proceeds to step S7. In a case where the next conversion table is not present, a routine proceeds to step S11.

In step S7, the conversion table size determination section 34 determines whether the conversion table to be referred to is loaded into the conversion table buffer 32 or not. In a case where the conversion table is loaded into the conversion table buffer 32 (step S7 is Yes), the routine proceeds to step S8. In a case where the conversion table is not loaded into the conversion table buffer 32, the routine proceeds to step S9.

In step S8, the search character string is converted into search data by referring to the conversion table which is loaded into the conversion table buffer 32, and then the routine proceeds to step S 10. In step S9, based on the procedure in step S3, the search character string is converted into search data by referring to the conversion table which is stored in the first memory 12, and then the routine proceeds to step S 10.

In step S 10, in a case where the search character string is converted into a plurality pieces of search data, the search data selection section selects one piece of search data, and then the routine returns to step S6 so as to repeat the process.

In step S11, the search section 23 conducts a search based on the search data obtained through a procedure in step S6, and then the routine proceeds to step S12. Search table data is acquired from the second memory 13. In step S12, the search result list display instruction section 24 causes the display 8 to display a search result list acquired through the search conducted by the search section 23, and then the routine proceeds to step S 13. In step S13, the search result selection section 25 selects a search result to be displayed its content, and then the routine proceeds to step S14. In step S14, the search result content display instruction section 26 causes the display 8 to display the content of the search result selected by the search result selection section 25. Note that the routine is repeated from step S4 in a case of repeating a search.

In the present embodiment, the search data selection section selects a piece of search data in a case where a plurality pieces of search data are present in step S10. However, the present invention is not specifically limited to this. It is also possible to skip step S10, so that the search section 23 conducts a plurality of searches based on each piece of the search data. Then, the search result list display instruction section 24 may cause the display 8 to display a plurality of search result lists in step S12.

A search operation flow conducted by the search device 1 is described by omitting step S1 through S3 and step S7 through S9 from the above operation flow. Further, a search operation flow of the search device 30a is described by omitting step S1, step S3, step S7, and step S9 from the above operation flow.

Further, it is possible to delete the conversion table which has been loaded into the conversion table buffer 32 but not in use, depending on a remaining capacity of the conversion table buffer 32. In other words, in a case where the conversion table buffer 32 does not have enough memory capacity, it is possible to delete the conversion table which has been loaded into the conversion table buffer 32 but not in use.

The search devices 30a and 30b (i) convert inputted data into search data by referring to a conversion table, the search data being searchable through a search table, and (ii) search for the search data thus obtained through the search table. The conversion table contains data in which a predetermined conversion condition is defined in, a row or a column basis and data are arranged in rows or columns. The search table contains the search data and predetermined information as a search result correlated to each other in a row or a column basis and the search data and predetermined information are arranged in rows or columns. The search devices 30a and 30b further include a conversion table buffer 32 which stores the conversion table as rewritable information, and obtain the search data by referring to the conversion table stored in the conversion table buffer 32 based on the inputted character string data.

According to the above arrangement, the search data to be searched is obtained by the search devices 30a and 30b by referring to the conversion table. Therefore, in a case where the conversion table is changed, it is also possible to obtain search data in the same manner by referring to the changed conversion table. Namely, it is not necessary to change a processing program of the search device 30a or 30b in a case of changing the conversion table. An advantage of the above arrangement is equivalent to the one mentioned in the embodiment 1. Further, the search devices 30a and 30b of the present invention can achieve high-speed conversion because the search devices 30a and 30b refer to the conversion table which is stored as rewritable information in the conversion table buffer 32. The conversion table buffer is stored in means which is accessible at a high speed, so that it is possible to perform a quick conversion.

### [Embodiment 3]

The following explanation deals with search table generation devices (search database generation devices) 40a and 40b of the present invention with reference to Fig. 27 through Fig. 37. For the sake of convenience in explanation, a member which has the same function of a corresponding member illustrated in drawings of the embodiment 1 or in drawings of the embodiment 2, is labeled with the same reference number and its explanation is omitted.

First, an overview of an arrangement of the search table generation device 40a is explained with reference to Fig. 27. Fig. 27 is a functional block diagram illustrating an arrangement of the search table generation device 40a of the present embodiment. The search table generation device 40a includes a search table acquisition section (search table data acquisition means, search database data acquisition means) 41, a conversion table acquisition section (conversion table acquisition means, conversion database acquisition means) 42, a conversion table buffer 43, a search table conversion section (search table data conversion means, search database data conversion means) 44, a post-conversion search table generation section (search table generation means, search database generation means) 45, a main body data acquisition section 46, and a search content generation section 47.

The search table acquisition section 41 is for acquiring data of a search table from a second memory 13 and sending the data to the search table conversion section 44. The search table acquisition section 41 continues the acquisition process while determining whether the search table data remains in the second memory 13 or not. In this way, the search table acquisition section 41 continues the acquisition process until completely acquiring the search table data to be converted. The conversion table acquisition section 42 is for acquiring data of a conversion table from a first memory 12 and sending the data to the conversion table buffer. The conversion table buffer 43 is for storing (loading) the conversion table data received from the conversion table acquisition section 42. For example, the conversion table buffer 43 can be realized by a data-rewritable memory device (RAM) or the like.

By referring to the conversion table stored in the conversion table buffer 43, the search table conversion section 44 converts the search table data received from the search table acquisition section 41. Further, in case the conversion is to be carried out by referring to a plurality of conversion tables, the search table conversion section 44 can successively convert the search table data by referring to a plurality of conversion tables stored in the conversion table buffer 43. Then, the search table conversion section 44 sends the converted search table data to the post-conversion search table generation section 45. The post-conversion search table generation section 45 generates a search table based on the converted search table data received from the search table conversion section 44. Further, the post-conversion search table generation section 45 is for sending the generated search table to the search content generation section 47. Further, the post-conversion search table generation section 45 sorts the search table based on the converted search data.

The main body data acquisition section 46 acquires (i) a conversion table from the first memory 12 and (ii) data necessary for displaying details of search results, such as a content of a search result, from an un-illustrated memory so as to send them to the search content generation section 47. The search content generation section 47 generates search contents based on (i) the search table received from the post-conversion search table generation section 45 and (ii) the conversion table and search result contents received from the main body data acquisition section 46. In the present application, the search contents include the conversion table, the search table, and the data for displaying details such as a content of a search result. Further, the search contents are data that is referred to in a process of a search based on a search character string by search devices such as the search device 1, and the search devices 30a and 30b.

The following explanation deals with an overview of an arrangement of the search table generation device 40b with reference to Fig. 28. Fig. 28 is a functional block diagram illustrating an arrangement of the search table generation device 40b according to the present embodiment. Based on the arrangement of the search table generation device 40a, the search table generation device 40b includes a search keyword acquisition section (search table data acquisition means, search database data acquisition means) 48 instead of the search table acquisition section 41, a search keyword conversion section (search table data conversion means, search database data conversion means) 49 instead of the search table conversion section 44, and a search table generation section (search table generation means, search database generation means) 50 instead of the post-conversion search table generation section 45. Note that a member which has the same function of a member of the search table generation device 40a, has the same reference number and its explanation is omitted.

The search keyword acquisition section 48 is for acquiring a search keyword from a second memory 13 and sending the search keyword to the search keyword conversion section 49. The search keyword acquisition section 48 continues the acquisition process while determining whether there is a remaining search keyword in the second memory 13 or not. In this way, the search keyword acquisition section 48 continues the acquisition process until completely acquiring search keywords to be converted. In this embodiment, search table data do not have a table data structure, but is stored in a form of independent search keywords in the second memory 13. By referring to a conversion table stored in the conversion table buffer 43, the search keyword conversion section 49 is for converting a search keyword received from the search keyword acquisition section 48. The search keyword conversion section 49 is for sending converted search keyword to the search table generation section 50. The search table generation section 50 is for generating a search table based on the converted search keyword received from the search keyword conversion section 49. Further, the search table generation section 50 is for sending the generated search table to the search content generation section 47.

In conducting a series of conversions by referring to a plurality of conversion tables, the search table conversion section 44 and the search keyword conversion section 49 obtain the number of conversion tables to be referred to for the conversions so that the search table conversion section 44 and the search keyword conversion section 49 carry out multiple conversions.

In the present embodiment, the search table generation device 40a includes the main body data acquisition section 46, and the search content generation section 47. However, the present invention is not specifically limited to this. For example, the search table generation device 40a may not include the main body data acquisition section 46 and the search content generation section 47, and may send the search table generated by the post-conversion search table generation section 45 to another device for generating search contents. Similarly, the search table generation device 40b may not include the main body data acquisition section 46 and the search content generation section 47, and may send the search table generated by the search table generation section 50 to another device for generating search contents.

Further, in the present embodiment, the search table acquisition section 41 is for sending the search table data acquired from the second memory 13 to the search table conversion section 44. However, the present invention is not specifically limited to this. For example, the search table acquisition section 40a may further include a search table buffer so that the search table acquisition section 41 can send the search table data acquired from the second memory 13 to the search table buffer for storing the search table data therein. In this case, the search table conversion section 44 can convert the search table data received from the search table buffer by referring to the conversion table stored in the conversion table buffer 43.

Next, an operation flow of the search table generation device 40b in converting a search keyword will be explained with reference to Fig. 29. Fig. 29 shows an operation flow of the search table generation device 40b according to the present embodiment in converting a search keyword.

First, in step S21, initialization is carried out, then the routine proceeds to step S22. In step S22, the search keyword acquisition section 48 acquires a search keyword from the second memory 13, then the routine proceeds to step S22. In step S23, the search keyword conversion section 49 acquires information of the number of conversion tables, then the routine proceeds to step S24. In step S24, the search keyword conversion section 49 converts the search keyword by referring to the conversion table which is stored in the conversion table buffer 43, then the routine proceeds to step S25.

In step S25, the search keyword conversion section 49 determines whether the converted search keyword needs further conversion or not. According to the number of the conversion tables, the search keyword conversion section 49 detects a remaining conversion table (next conversion table) which is not used for the conversion. In a case where the next conversion table is present (step S25 is Yes), the routine proceeds to step S26. In a case where the next conversion table is not present (step S25 is No), the routine proceeds to step S27.

In step S26, the converted search keyword is further converted by referring to the next conversion table, then the routine returns to step S25 so as to repeat the procedure. In step S27, the search keyword acquisition section 48 determines whether there is a remaining search keyword that is not converted. In a case where a remaining search keyword is present (step S27 is Yes), the routine proceeds to step S28. In a case where a remaining search keyword is not present (step S27 is No), a search table is generated based on the search keyword converted by the search table generation section 50 since the conversion of the search keyword is considered as completed. In step S28, since conversions are not completed, the search keyword acquisition section 48 acquires the next search keyword, then the routine returns to step S24 so as to repeat the procedure. Note that the search table generation device 40a also has the same operation flow in converting a search keyword.

According to the above arrangement, a new search table is created based on search data of a search table which search data is converted by referring to a conversion table. Therefore, a change in the conversion table causes creating a search table corresponding to the changed conversion table, the conversion table being used for converting search data of the search table. The search table corresponding to the conversion table is a search table through which search data converted by the conversion table can be searched. The conversion is carried out in order to arrange search results in a desired order; however, a converted character code of the search data might be changed significantly from an original character code. In such case, the converted character code would not be a word that is readily understandable to human. Therefore, it is difficult to carry out the conversion or check the converted character code manually. On the other hand, the conversion table and the search table before conversion are easy to recognize by sight so that error can be detected with ease. Therefore, it is possible to create reliable search data arranged in a desired order with ease in such a manner that a device carries out a conversion that is not easy to be done by a human, by use of the original data that is easy to be checked by a human. Further, advantageous effects derived from the conversion table generation device by use of a conversion table in combination with a search table are described in Embodiment 1 and Embodiment 2.

The following explanation deals with examples of search tables that the search table generation device 40a actually generated with reference to Fig. 15, Fig. 17, Fig. 18, and Fig. 30 through Fig. 37.

First, with reference to Fig. 15, Fig. 30, and Fig. 33, the following explanation deals with an example of a search table generated by the search table generation device 40a based on a German search table, the generated search table corresponding to a German conversion table. As described above, Fig. 15 is a drawing illustrating an example of the German conversion table. In the present embodiment, a conversion condition of the Germany conversion table 1 in Fig. 15 is defined such that a character string is normalized by removing umlauts. As described above, Fig. 30 is a drawing illustrating an example of the German search table. Fig. 33 is a drawing illustrating the German search table generated by the search table generation device 40a based on the German conversion table 1 in Fig. 15 and the German search table in Fig. 30.

The German search table in Fig. 30 which has not been converted by the search table generation device 40a includes umlauts in a character string of "reading" serving as search data which corresponds to a character string of "search result display character string" serving as a search result. Therefore, in a case where "ba*che" is searched as search data by referring to the German search table in Fig. 30, a search result of "bac*che" is not displayed between "bach" and "backen" as an order in a normal German dictionary, but is displayed at a position in accordance with a character code of ISO 8859-15 (Latin Alphabet No. 9), for example. Namely, according to the character code, "a*" (character code: 0 × E4) is not located between "a" (character code: 0 × 61) and "b" (character code: 0 × 62), but is located behind "z" (character code: 0 × 7A). As a result, the search result of "ba*che" by referring to the German search table in Fig. 30 is not located at a position between "bach" and "backen" as an order in a normal dictionary, but is located way behind that position. This confuses a user because the order of the search result is different from the order in a normal dictionary.

On the contrary, the German search table in Fig. 33 includes no umlauts in a character string of "reading" serving as search data which corresponds to a character string of "search result display character string" serving as a search result. For example, "ba*che" is converted into "bache" by removing the umlaut. Therefore, for example, in a case where search data "ba*che" is searched through the German search table in Fig. 33, a search result of "ba*che" is displayed in a position between "bach" and "backen" same as the order in a normal dictionary. This will not confuse a user.

In addition to the removal of ligatures such as the umlaut as described above, it is possible to convert a character into a combination of numbers to deal with a problem regarding the order of search results. The following explanation deals with an example of converting a character into a combination of numbers with refereeing to Fig. 17, Fig. 31, and Fig. 24. Fig. 17 is a drawing illustrating an example of a Swedish conversion table as described above. In the present embodiment, a conversion condition of the Swedish conversion table is defined such that a character is converted into a combination of numbers. Fig. 31 is a drawing illustrating an example of a Swedish search table. Fig. 34 is a drawing illustrating a Swedish search table created by the search table generation device 40a based on the Swedish conversion table in Fig. 17 and the Swedish search table in Fig. 31. The Swedish search table in Fig. 31 generated by the search table generation device 40a includes a combination of numbers instead of a character string in a "reading" column serving as search data which corresponds to a character string of a "search result character string" serving as a search result. In a case of displaying search results, the search results are displayed in numerical order converted from the character codes. Therefore, the search results can be sorted according to a number allotted to each of the characters including a ligature. For easy understanding, numbers are used in Fig. 17. However, character codes may be converted into different characters in an actual case instead of the numbers from 1 to 29.

As another example, it is possible to insert a dummy code between adjacent two characters by conducting a conversion. With reference to Fig. 18, Fig. 32, and Fig. 35, the following explanation deals with an example to insert a dummy code between adjacent two characters by conducting a conversion. Fig. 18 is a drawing illustrating an example of the Spanish conversion table as described above. In the present embodiment, a conversion condition of the Spanish conversion table 1 is defined such that a dummy code is placed between "c" and the following character except Spanish ligature "ch". Fig. 32 is a drawing illustrating an example of a Spanish search table. Fig. 35 is a drawing illustrating a Spanish search table generated by the search table generation device 40a based on the Spanish conversion table 1 in Fig. 18 and the Spanish search table in Fig. 32.

In the Spanish search table in Fig. 32 generated by the search table generation device 40a, a dummy code "=" (character code: 0 × 3D) is inserted between "c" (character code: 0 × 63) and the following character except a Spanish ligature "ch" in a character string of "reading" serving as search data which corresponds to a character string of "search result display character string" serving as a search result. In a case of displaying search results, the search results are sorted according to the character code so that the dummy code comes before an alphabet. As a result, it is possible to display a search result of a word including "ch" behind a search result of a word including "c" and the following character other than the word including "ch".

In addition to carry out a table sorting to deal with a ligature which is unique to each of the languages, it is also possible to create a search table in accordance with a Japanese normalization rule. The following explanation deals with an example of a search table which is created in accordance with a Japanese normalization rule with reference to Fig. 36 and Fig. 37. Fig. 36 is a drawing illustrating an example of a Japanese search table. Fig. 37 is a drawing illustrating a Japanese search table which is generated by the search table generation device 40a based on the Japanese search table for carrying out predetermined normalization and the Japanese search table in Fig. 36. The predetermined normalization is carried out in such a manner that (i) a dull sound character is converted into a clear sound character, (ii) a lower case character is converted into an upper case character, (iii) a prolonged sound character is converted into a vowel character, and (iv) glottal stop is eliminated. As is shown in Fig. 37, in the Japanese search table in Fig. 37 obtained by the search table generation device 40a, a character string of a "reading" serving as search data which corresponds to a character string of a "search result display character string" serving a search result. The character string of the "reading" is compliant with the predetermined normalization rule.

Each of the search table generation devices 40a and 40b according to the present embodiment is for creating a search table corresponding to a conversion table, and they are applicable to the search device 1, the search device 30a, or the search device 30b. In such case, whenever changing a conversion table or a search table which is used in the search device 1, the search device 30a, or the search device 30b, the search table generation device 40a or 40b can provide a search table which is sorted in accordance with the conversion table. Therefore, every time when a search table or a conversion table is changed, a search table which is sorted in accordance with the changed conversion table can be used in the search device 1, the search device 30a, or the search device 30b without changing respective programs. As a result, it is possible to realize a search device which has versatility with ease.

Finally, each of the sections and processing steps of the search device 1, the search device 30a, the search device 30b, the search table generation device 40a, and the search table generation device 40b in accordance with the present embodiment can be realized in such a manner that a calculation section such as a CPU executes a program which is stored in a ROM (Read Only Memory) or a RAM, and controls input means such as a keyboard, output means such as a display, or communication means such as an interface circuit. Therefore, a computer including those means execute the program by reading a recording medium in which the program is stored so that each of the functions and processing steps of the search device 1, the search device 30a, the search device 30b, the search table generation device 40a, and the search table generation device 40b in accordance with the present embodiment can be realized. Further, it is also possible to carry out each of the functions and processing steps by any computers by storing the program in a removable recording medium.

The recording medium as a program medium can be realized by an un-illustrated memory such as a ROM so that a microcomputer can execute processing. Alternatively, the program medium can be realized by a recording medium which is inserted into a program reading device that is provided as an un-illustrated external memory device, so that the program can be read by the program reading device.

In any cases, it is preferable that the stored program is executed by a microprocessor by accessing it. Further, it is more preferable that the program is executed by being retrieved and downloaded into a program memory area of the microcomputer. Note that the program for downloading is stored in a main device beforehand.

The program medium is a recording medium which can be separated from the main body. Examples of the recording medium encompass: tapes such as a magnetic tape, and a cassette tape; magnetic discs such as a flexible disc, and a hard disc; discs such as a CD, an MO, an MD, and a DVD; cards such as an IC card (including a memory card); and memory media which can fixedly store a program such as a semiconductor memory including a mask-ROM, an EPROM (Erasable Programmable Read Only Memory), an EEPROM (Electrically Erasable Programmable Read Only Memory), and a flash ROM.

In a case where a system is accessible to a communication network such as the Internet, it is preferable that a recording medium can store a program in a flowing manner by downloading it through a communication network.

In a case where the program is downloaded through a communication network, it is preferable that a program for downloading is stored in the main device beforehand or is installed from another recording medium.

The present invention is not limited to the description of the embodiments above, but may be altered by a skilled person within the scope of the claims. An embodiment based on a proper combination of technical means disclosed in different embodiments is encompassed in the technical scope of the present invention.

As described before, the search device of the present invention which (i) converts inputted data into a search database by referring to a conversion database which contains pre-established data relationships, and (ii) searches for the search data through a search database in which the search data and predetermined information as search results are correlated each other, the search device including conversion database inquiry means for acquiring the search data for the inputted character string by referring to the conversion database, the conversion database being stored in an external recording medium which is connectable to the search device.

According to the invention, the search device can acquire search data to be searched through the search database by referring to the conversion database. Therefore, in a case where the conversion database is changed, it is also possible to acquire search data in the same manner by referring to the conversion database thus changed. Namely, it is not necessary to revise a processing program of the search device in a case of changing the conversion database. Further, since the search device of the present invention refers to the conversion database which is stored in an external memory device, it is possible to change the conversion database by changing the external memory device to be referring to. This makes it easy to revise the conversion database. Accordingly, the search device of the present invention has better versatility. As a result, the search device which has versatility and expansibility can be realized with ease. Specifically, in the search device of the present invention, the conversion database may be a conversion table, and the search database may be a search table.

Further, in the search device of the present invention, it is preferable that in a case where the external recording medium includes a plurality of conversion tables, the conversion database inquiry means acquires the search data by referring to one of the conversion tables based on the inputted character string, and then the conversion database inquiry means further refers to another one of the conversion tables based on the search data so as to acquire new search data.

This allows acquiring search data by referring to a plurality of conversion tables in combination. Therefore, various search data can be acquired by changing a combination of conversion tables.

Further, it is preferable that the search device of the present invention further includes: conversion table size acquisition means for acquiring size information of the conversion table; a storage section provided inside the search device; conversion table size determination means for determining whether the conversion table is stored in the storage section or not, the conversion table size determination means performing the determination based on the size information of the conversion table acquired by the conversion table size acquisition means; and conversion table retrieving means for retrieving the conversion table from the external recording medium so as to store the conversion table in the storage section according to a determination result made in the conversion table size determination means, the search device acquiring the search data by referring to the conversion table stored in the storage section according to the determination result.

According to the size information of the conversion tale acquired by the conversion table size acquisition means, the conversion table size determination means causes the conversion table retrieving means to store the conversion table into the storage section. This allows making a determination whether the conversion table is stored in the storage section or not depending on the size of the conversion table. Further, it is possible to obtain search data by referring to the conversion table which is stored in the storage section according to the determination result made by the conversion table size determination section. Therefore, depending on the size of the conversion table, it is possible to select which place to store the conversion table, in the external recording medium or in the storage section; and it is possible to use the stored conversion by making an inquiry.

Further, it is preferable that the search device of the present invention further includes display means for displaying a search result, the display means displaying the search result and a preceding and/or following search result(s) in the search table in accordance with an order in the search table.

This allows displaying the search result which is obtained by the search device of the present invention as well as the former or the latter search result in the search table in accordance with the order in the search table.

Note that each of the means in the search device can be performed on a computer by a program. Further, the program can be performed on any computers by storing the program in a computer-readable recording medium.

As described above, a search method of the present invention performed by a search device which (i) converts inputted data into search data by referring to a conversion database which contains pre-established data relationships, and (ii) searches for the search data through a search database in which the search data and predetermined information as search results are correlated to each other, the method including the conversion database inquiry step for acquiring the search data for the inputted character string by referring to the conversion database, the conversion database being stored in an external recording medium which is connectable to the search device.

This allows more easily realizing a search device which has versatility and extensibility.

A search database generation device of the present invention includes: search database data acquisition means for acquiring search data in a search database in which the search data and predetermined information as search results are correlated to each other; conversion database acquisition means for acquiring a conversion database in which the search data and predetermined information are correlated to each other; search database data conversion means for converting the search data by referring to the conversion database; and search database generation means for generating a new search database based on the search data thus converted by the search database data conversion means.

According to the above invention, it is possible to create a new search database by converting the search data of the original search database by referring to the conversion database. A change in the conversion database causes creating a search database corresponding to the changed conversion database. Therefore, in a case where the conversion database is changed, it is possible to create a search database corresponding to the changed conversion database. This makes more easily realize the search device having versatility and extensibility.

For example, unlike the present invention, in a case where a conversion database is not used, it is necessary to prepare a search database which is sorted in a desired order in advance. In a case of changing a sorting rule of a search database, this invention can deal with it by revising the conversion database. In a case where the present invention is not used, however, it is necessary to recreate a search database in a desired order. Further, unlike the present invention, in a case where a new search database arranged in a desired order is created without performing a conversion, it may be necessary to search the entire search database, or may be necessary for a search program to perform a special sorting when search data of the search database are not arranged in the character code order or in numerical order. This prevents performing a high-speed search.

Thus, this invention allows changing a conversion rule with ease, thereby realizing a search device which can perform a high-speed search.

Note that each of the means in the search database generation device can be carried out on a computer by a program. Further, the program can be performed on any computers by storing the program in a computer-readable recording medium.

A search database generation method of the present invention includes: the conversion database acquisition step for acquiring a conversion database which contains pre-established data relationships; the search database data acquisition step for acquiring search data in a search database in which the search data and predetermined information as a search result are correlated to each other; the search database data conversion step for converting the search data by referring to the conversion database; and the search database generation step for generating a new search database based on the search data thus converted in the search database data conversion step.

The above invention allows more easily realizing a search device which has versatility and extensibility.

### Industrial Applicability

As described above, the present invention including a search device, a search database generation device, a program thereof, a computer-readable recording medium in which the program is stored, a search method, and a method for generating a search database, allows easily realizing the search device which has versatility and expansibility. Therefore, the present invention is applicable to an industrial field related to search devices such as a word processor, a personal computer, an electric diary, or the like including an electric dictionary or electric encyclopedia therein.

## Claims

1. A search device which (i) converts inputted data into a search database by referring to a conversion database which contains pre-established data relationships, and (ii) searches for the search data through a search database in which the search data and predetermined information as search results are correlated to each other,
the search device comprising:
conversion database inquiry means for acquiring the search data for the inputted character string by referring to the conversion database, the conversion database being stored in an external recording medium which is connectable to the search device.

2. The search device according to Claim 1, wherein:
the conversion database is a conversion table; and
the search database is a search table.

3. The search device according to Claim 2, wherein:
in a case where the external recording medium includes a plurality of conversion tables, the conversion database inquiry means acquires the search data by referring to one of the conversion tables based on the inputted character string, and then the conversion database inquiry means further refers to another one of the conversion tables based on the search data so as to acquire new search data.

4. The search device according to Claim 2, further comprising:
conversion table size acquisition means for acquiring size information of the conversion table;
a storage section provided inside the search device;
conversion table size determination means for determining whether the conversion table is stored in the storage section or not, conversion table size determination means performing the determination based on the size information of the conversion table acquired by the conversion table size acquisition means; and
conversion table retrieving means for retrieving the conversion table from the external recording medium so as to store the conversion table in the storage section according to a determination result made by the conversion table size determination means,
wherein the search device acquires the search data by referring to the conversion table stored in the storage section according to the determination result.

5. The search device according to any one of Claims 2 to 4, further comprising:
display means for displaying a search result,
the display means displaying the search result and a preceding and/or following search result(s) in the search table in accordance with an order in the search table.

6. A program for causing a computer to perform as each means provided in a search device according to any one of Claims 1 to 5.

7. A search method performed by a search device which (i) converts inputted data into search data by referring to a conversion database which contains pre-established data relationships, and (ii) searches for the search data through a search database in which the search data and predetermined information as search results are correlated to each other,
the method comprising:
the conversion database inquiry step for acquiring the search data for the inputted character string by referring to the conversion database, the conversion database being stored in an external recording medium which is connectable to the search device.

8. . A search database generation device comprising:
search database data acquisition means for acquiring search data in a search database in which the search data and predetermined information as search results are correlated to each other;
conversion database acquisition means for acquiring a conversion database in which the search data and predetermined information are correlated to each other;
search database data conversion means for converting the search data by referring to the conversion database; and
search database generation means for generating a new search database based on the search data thus converted by the search database data conversion means.

9. A program for causing a computer to perform as each means provided in a search database generation device according to Claim 8.

10. A computer-readable recording medium which stores a program according to Claim 6 or 9 therein.

11. A search database generation method comprising:
the conversion database acquisition step for acquiring a conversion database which contains pre-established data relationships;
the search database data acquisition step for acquiring search data in a search database in which the search data and predetermined information as a search result are correlated to each other;
the search database data conversion step for converting the search data by referring to the conversion database; and
the search database generation step for generating a new search database based on the search data thus converted in the search database data conversion step.
